# EUROPEAN PATENT SPECIFICATION

(11) **EP 2 660 581 B1**
(45) Date of publication and mention of the grant of the patent: **06.04.2016**
(21) Application number: 10821419.8
(22) Date of filing: 30.12.2010
(51) Int. Cl.: G01M 15/02, G01M 15/04

(54) **SYSTEM FOR TESTING AND EVALUATING THE PERFORMANCE AND ENERGY EFFICIENCY OF THE DRIVE SYSTEM OF A HYBRID-ELECTRIC AUTOMOTIVE VEHICLE**
SYSTEM ZUM TESTEN UND ZUR EVALUIERUNG DER LEISTUNG UND ENERGIEEFFIZIENZ DES ANTRIEBSSYSTEMS EINES HYBRID-ELEKTROFAHRZEUGES.
SYSTÈME POUR TESTER ET ÉVALUER LE COMPORTEMENT ET L'EFFICACITÉ ÉNERGÉTIQUE DU SYSTÈME DE PROPULSION D'UN VÉHICULE AUTOMOBILE HYBRIDE-ÉLECTRIQUE

(43) Date of publication of application: 06.11.2013
(73) Proprietor: Fundacion Tecnalia Research & Innovation, 48160 Derio (Vizcaya) (ES)
(72) Inventor: VALERA GARCÍA, Juan, José, E-48160 Derio (vizcaya) (ES); PEÑA RODRÍGUEZ, Alberto, E-48160 Derio (vizcaya) (ES); MARTÍN SANDI, Adrián, E-48160 Derio (vizcaya) (ES); IGLESIAS AGUINAGA, Iñaki, E-48160 Derio (vizcaya) (ES)
(74) Representative: Stiebe, Lars Magnus
(86) International application number: PCT/ES2010/070878
(87) International publication number: WO 2012/089857

(56) References cited:
- EP-A2- 0 731 361
- EP-A2- 2 264 421
- JP-A- 2000 035 380

## Description

### Technical Field of the invention

The present invention is comprised in the technical field of simulating and testing systems which are used in the automotive sector and, particularly, in that of systems (devices + methods) which serve to test and evaluate/characterize the energy efficiency of the drive system of hybrid-electric automotive vehicles.

### Background of the Invention

There are various hybrid vehicles today with different architectures in terms of their drive system. A drive system of a hybrid-electric vehicle comprises an electric drive based on an electric machine EM and a conventional drive based on an internal combustion machine ICM (whose power distribution with respect to the total power of the vehicle is referred to as degree of hybridization), which can have a series, parallel or combined parallel-series architecture. In drive systems with series architecture, the vehicle is driven only with the electric drive system through the mechanical power generated by the electric machine. In this architecture the necessary electric energy can come from either the battery-based storage system or from the conventional ICE-based drive system which generates a mechanical power that is converted into electric power through an electric generator coupled to its shaft. In the parallel architecture, the conventional ICE-based drive is the main source of mechanical power necessary to drive the vehicle whereas the EM-based electric drive system provides more mechanical power to the vehicle when it is necessary for example, in accelerations, or the vehicle could even movie several kilometers in an urban driving cycle if the mechanical coupling system of the drive systems to the axle of the wheels allows it. In this architecture (parallel) the conventional drive system (ICE) could provide more mechanical power than that demanded for the drive of the vehicle. This extra power is converted into electric power through an electric generator and is used for the auto-recharge of the batteries of the electric drive system, therefore not needing the external recharge thereof. Hybrid drive systems with combined series-parallel architecture have all the functionalities that can be offered by series and parallel architectures (TOYOTA PRIUS for example uses a combined architecture). The electric drive generally works alone at a low speed, whereas at a high speed the conventional drive and the electric drive work at the same time. The conventional drive can combine vehicle drive functions, battery auto-recharge functions or even provide the electric energy necessary for the electric drive system depending on the degree of hybridization installed and on the energy management possibilities of the vehicle.

As can be observed, there are many operating possibilities or modes of a hybrid-electric vehicle depending on the architecture of its drive system, on the degree of hybridization installed, of the need or not of an external battery recharge, and on the energy management possibilities incorporated in the vehicle. The interest in drive architectures and vehicles of this type and the huge advance made in them is very high, sparked from the requirements of improving the energy efficiency, fuel economy and the government-imposed measures concerning the reduction of greenhouse gas emissions in the highway transport sector.

There are many possibilities with respect to the improvement of the energy efficiency of the hybrid-electric vehicle by means of the incorporation and energy management of combined drive systems and a high degree of hybridization, there being many energy management methods and strategies which are evaluated and conceptualized by means of numerical simulation in the first stages of design and subsequently validated once in the vehicle. In this sense, it has been detected that there is a void in terms of agile, flexible and rapidly reconfigurable validation methods and devices for these complex hybrid-electric drive systems before they are installed in the vehicle itself for a subsequent quasi-realistic evaluation.

Furthermore, from an energy efficiency point of view, a very important aspect to be taken into account is that of effectively managing the regenerative braking of the vehicle. The entrance of electric drives in vehicles means that part of the kinetic energy accumulated in the vehicle can be recovered in the form of electric energy in the batteries during braking or downhill processes of the vehicle. To that end, the conventional electric braking systems (ABS) of the vehicle must be perfectly managed and synchronized such that from the driver's point of view there is only a single braking response, but from the drive system and vehicle point of view, the braking required by the driver is achieved with minimal energy expenditure in the form of heat in the discs/pads of the conventional braking system by means of suitable management of the electric-type regenerative braking. In this invention proposal, the aspect relating to regenerative braking is also considered as an important global testing point concerning the energy efficiency of the hybrid-electric drive system of the vehicle.

Simulation and testing systems for automotive vehicles have been known for some time, comprising a test bench in which driving vehicle in diverse conditions is simulated, these data serving to test the dynamic performance and the durability of different elements of the vehicle such as, for example, the suspension system [US2007/0260372 A1, US1996/5487301, US1999/5942673, WO2007/133599 A2, US2007/0260438 A1, US2007/0118258 A1], the performance of the internal combustion engine [US2004/6754615 B1, US2010/7680639 B2], the gearbox, the transmission elements, the characterization and evaluation of the tires [US2009/0012763], etc. However, though there are some test devices and simulators for hybrid vehicles and drive systems for the purpose of testing different aspects thereof [CN101241168, CN201193984U, CN101660972], the inventors are not aware of any which relates to testing from an energy efficiency point of view concerning drive systems with complex advanced architectures and which are further rapidly adaptable and reconfigurable to all possibilities concerning architecture and operating modes. In known simulation systems for hybrid vehicles and drive systems, the device emulating the vehicle is connected to an electric motor and to an internal combustion engine through a continuous variable transmission system (CVT = Continuous Variable Transmission), and/or a planetary-type transmission system and/or one or several clutches which allow coupling the different mechanical power suppliers to the wheels of the vehicle in a determined manner. A system with a specific architecture would thus be tested, using bedplates with expensive mechanical couplings (clutches, couplings and planetary-type variable transmission systems), so the existing simulation systems for hybrid vehicles exclusively relate to a single configuration and to the existing energy management possibilities depending on the restrictions imposed by the mentioned coupling. Therefore, the known simulation systems have the drawback of being exclusively intended for a specific type of car or architecture and they do not allow testing different architectures and energy strategies/operating modes in an agile, flexible and dynamically reconfigurable manner. EP-0 73136, discloses a similar test beach for testing an electric motor.

### Description of the Invention

The object of the present invention is to overcome the drawbacks of the prior art described above by means of a system for testing and evaluating the performance and energy efficiency (energy management of the drive and management of the regenerative braking) of a hybrid-electric drive system (or parts/components of a system) according to what is described in claim 1.

The system of the invention comprises a test bench controlled by an emulation device which can emulate driving the vehicle in real time and can be mechanically connected to an internal combustion machine and to an electric machine of the hybrid-electric drive system to be tested.

The test bench further comprises:
a first electric machine (EM1) that can be coupled by means of a first direct mechanical coupling to the electric machine (EM) of the hybrid-electric drive system to be tested;
a second electric machine (EM2) that can be coupled by means of a second direct mechanical coupling to the internal combustion engine (ICE) of the hybrid-electric drive system to be tested;
an electric energy conversion device (PS2) controlling the torque that can be provided by the first electric machine and the torque that can be provided by the second electric machine and the power to be delivered to a power distribution and junction box containing the direct current bus of the hybrid-electric drive system and
a control connection which connects the electric energy conversion device (PS2) with the emulation device.

The emulation device calculates the resistance torque applied by the first electric machine on the shaft of the electric machine and the resistance torque applied by the second electric machine on the shaft of the internal combustion machine and the power to be delivered to the power distribution and junction box containing the direct bus through the energy conversion device, depending on the resistance forces which oppose the drive forces due to the effect of the emulated driving of the vehicle and of the operating mode or combination of operating modes to which the hybrid-electric drive system is to be subjected during the test, operating mode being understood as the different working modes which the system/test bench can reproduce on the hybrid-electric drive system during the test, which can be: series mode, parallel mode, parallel-series mode, pure electric mode, pure electric mode with range expander, and regenerative braking mode.

The emulation device is a real time emulator of a moving vehicle, with different approaches if a real or an emulated driver is to be used, and whether or not the environment through which the vehicle is driven (DVE) is to be emulated.

In a preferred embodiment, the test bench, controlled (and supervised) by the emulation device, can be connected to the following subsystems belonging to the hybrid-electric drive system to be tested:
- Mechanically connectable to an internal combustion engine (ICE) to be tested;
- mechanically connectable to an electric machine (EM) to be tested;
- electrically connectable to a direct current power distribution and junction box (HVDC-link, high-voltage direct current bus of the hybrid-electric drive system) through a direct current power electrical connection and of a control electrical connection;
- electronically connectable at the control level through an interface device to an energy management subsystem (its own exchange or function incorporated within another exchange) (EMS);
- electronically connectable at the control level through an interface device to a brake management subsystem (its own exchange or function incorporated within another exchange);
- electronically connectable at the control level through an interface device to a subsystem (its own exchange or function incorporated within another exchange) of control panel management.

The system can incorporate a first torque sensor installed in the shaft of the first electric machine and a first control connection which connects the first torque sensor with the electric energy conversion device (PS2).

The system can incorporate a second torque sensor installed in the shaft of the second electric machine and a second control connection which connects the second torque sensor with the electric energy conversion device (PS2).

The electric energy conversion device (PS2) can comprise a constant frequency alternating current input, a first variable frequency and magnitude alternating current output, connected to the first electric machine (EM1), a second variable frequency and magnitude alternating current output, connected to the second electric machine (EM2), and a direct current power output connected to a power distribution and junction box (HVDC-link) of the hybrid-electric drive system to be tested. This device contains a set of subsystems which all allow controlling and reproducing the different operating modes and the power distributions in each mode while testing the hybrid-electric drive system.

In an embodiment of the invention, the electric energy conversion device (PS2) comprises the following subsystems, being able to be independent devices but perfectly connected to one another:
a two-way AC/DC converter connected through its input to the alternating current supply connection input (three-phase) and through its direct current output, through a DC/DC step-down converter, to the power distribution box (HVDC-link) of the hybrid-electric drive system to be tested, to a first DC/AC inverter connected to the first electric machine (EM1) through the first alternating current output and to a second DC/AC inverter connected to the second electric machine (EM2) through the second alternating current output.

The power semiconductor modules that are part of the AC/DC converter, of the first DC/AC inverter, of the second DC/AC inverter and of the DC/DC step-down converter receive the firing orders from a module containing the corresponding firing circuits which is in turn connected to a control unit based on DSP (Digital Signal Processor) controlling the static and dynamic response of the electric energy conversion stages of the electric energy conversion device (PS2) and performs the controls of the first electric machine (EM1) and of the second electric machine (EM2). To perform the mentioned controls, the control unit based on DSP receives measurements from a current sensor connected to the output of the DC/DC step-down converter, from three current sensors connected to the output of the second DC/AC inverter, from three current sensors connected to the output of the firs DC/AC inverter, from a first torque sensor installed in the shaft of the first electric machine (EM1), from a second torque sensor installed in the shaft of the second electric machine (EM2), from a voltage sensor installed in the power distribution and junction box (HVDC-link) of the hybrid-electric drive system to be tested, from a first angular position sensor installed in the shaft of the first electric machine (EM1), and from a second angular position sensor installed in the shaft of the second electric machine (EM2).

The control unit also receives command signals and sends state signals through a control connection which connects the electric energy conversion device, (PS2) with the emulation device (DVE).

The emulation device can comprise:
- a model emulating the performance of the coupling system for the electric machine and the internal combustion machine towards the output shaft of the wheels of the vehicle. The model thus obtains, from the torque measurements in the shafts of the machine (ICM) and of the machine (EM), the resulting effective drive torque relating to the shafts of the drive wheels. This model further calculates the resistance torques (due to the resistance forces opposing the drive of the vehicle) to be imposed on the shafts of the internal combustion machine (ICM) and electric machine (EM) by means of the first electric machine (EM1) and the second electric machine (EM2) of the test bench.

- a model emulating the longitudinal and lateral dynamic performance of the vehicle. This model can calculate in real time all the longitudinal, lateral and vertical forces occurring in the drive wheels due to the effect of the movement of the vehicle.
- a model emulating the performance of a continuous variable transmission (CVT), if there is one;
- a model emulating the performance of the conventional ABS (Active Brake System) braking system, using to that end the braking orders received from the brake management subsystem through the interface device. This system obtains the braking forces in each wheel and sends them to the longitudinal and lateral dynamic performance model.
- a virtual real scenario model emulating the driving environment (characteristics of the road, straight stretches, curves, slopes, traffic signals, road profiles, uneven areas, etc.).
The emulation device (DVE) can incorporate a model emulating a driver who is driving in the selected scenario, in order to automate the tests assuring repeatability in terms of the driver response. The outputs of this model, correspond to the emulated response of the gas and brake pedals and the steering angle of the steering wheel, and are sent to the control panel management subsystem, and they will be selected in the event that a virtual driver is to be used, otherwise the control panel management subsystem will select the inputs coming from the vehicle control panel which are handled by an actual driver.

As can be inferred from the foregoing description, the system according to the present invention is a system based on a dynamically reconfigurable test bench formed by two electric machines and a set of power and control devices which allows testing/characterizing both the dynamic performance and the performance from an energy point of view for the main components (PBAT pack of batteries, ICM internal combustion machine, EM electric machine, electric machine EM PINV inverter controller, EMS energy management subsystem, as well as the brake management subsystem) of different architectures/configurations of the drive system of hybrid-electric vehicles. The possible architectures/configurations of the drive system to be tested are: 1: parallel hybrid, 2: series hybrid, 3: combined series-parallel hybrid and 4: electric with range expansion. The system (test bench) is controlled by a device in real time which allows the 'DVE' in the Loop (Driver-Vehicle-Environment in the Loop) technique, which allows testing the hybrid-electric drive system in real time given realistic driving in virtual scenarios, taking into account the dynamic performance, both in its longitudinal and lateral response, of the selected vehicle. The remaining power devices (PS2 conversion device) and control devices (DVE emulator, interface) allow the easy and rapid reconfigurability and adaptation of the test bench to the different architectures/configurations of the drive system of hybrid-electric vehicles.

The advantage that can be offered by the proposed invention (system and method) resides in the quasi-realistic evaluation of the energy efficiency of different hybrid drive architectures, as well as the evaluation and optimization of energy management methods, including management of the regenerative braking of the vehicle. The purpose is to obtain realistic data and the evidence (from the energy efficiency point of view) necessary for the: 1: design and implementation and final optimization of the architecture and structure of the transmission system and mechanical coupling necessary between both mechanical power suppliers of the hybrid drive system (the electric machine and the internal combustion machine), 2: the optimal adjustment of the response of the electric and mechanical components of the hybrid-electric drive system, and 3: the design and optimization of the energy management algorithms (selection of the operating modes of then vehicle and distribution of powers among the different electric and mechanical power suppliers that may exist) and management/synchronization algorithms of the braking system (regenerative and conventional) of the vehicle. It is, therefore, a testing system to be used for optimizing the design of the aforementioned aspects/concepts, which are very closely related to drive system energy efficiency in hybrid-electric vehicles.

The main contributions provided by the present invention are:
- Flexibility - easy-rapid reconfigurability to the different architectures/configurations of the hybrid-electric drive system with the same set of devices.
- It prevents the need to have mechanical variable transmission CVT (continuous variable transmission) systems with planetary-type systems in the test bench for coupling the two drive sources which, in the case of hybrid vehicles in parallel-series configuration such as Toyota Prius are complex and impose certain restrictions on the possible energy strategies to be evaluated. The variable transmission system and planetary-type coupling system would be modeled/emulated in real time within the emulation device (DVE in the Loop) for configurations of this type.
- The real time simulation device DVE takes into account both the longitudinal response and the dynamic/lateral response of the vehicle and the incidence thereof on the vehicle energy performance. To test the energy performance of the drive system (energy efficiencies, EMS strategies, etc.,), longitudinal dynamics/performance models of the vehicle, and often even just the models taking into account permanent states (steady state models, backward facing models), are typically used, disregarding the effect that both the transient states and the lateral dynamics/performance of the vehicle may have. At high speeds, both effects (transient effects in longitudinal response, lateral dynamics) can be disregarded, but at low speeds and depending on the parameters relating to the mini-corner (tire/wheel parameters, camber angles, etc.), they have a greater effect. In this device, the vehicle is emulated in real time both in its longitudinal dynamics and in its lateral dynamics, and furthermore with a forward topology (solving differential equations representing the vehicle dynamics by means of numerical integration methods), taking into account both the transient and the permanent state. This means that the tests relating to the vehicle energy performance are performed with greater precision.
- The possibility of being able to test the vehicle braking management also stands out among the energy performance tests that can be performed. In electric vehicles, there are two ways to brake the vehicle: 1: regenerative braking by means of the electric drive system (EM, PINV) operating in the second quadrant and returning the part of the accumulated kinetic energy of the vehicle to be braked to a system of batteries (PBAT) and 2: conventional braking by friction (disc, pads) in the vehicles and ABS (Active Brake System) system. Due to the limitation in terms of the energy absorption capacity of the batteries which depends, among others, on the state of charge thereof, on the electrochemical technology used, on the temperature, etc., a vehicle cannot be entirely braked, according to the driver's demand, using only the electric regenerative braking. Therefore the synchronization and management of the global braking of the vehicle using both strategies (regenerative braking, conventional ABS braking) is a key element to be tested which affects both the energy efficiency of the vehicle and the safety of said vehicle and its occupants. The proposed system allows testing said management by emulating in real time the ABS braking performance within the emulation device (DVE) receiving the orders given by the brake management subsystem. Thus, the exchange/subsystem which performs said management/synchronization between both braking possibilities can be tested, and the global vehicle braking performance and the incidence thereof on the longitudinal and lateral response thereof can be emulated in real time. The resulting braking torque on the shaft of the electric drive element due to the effect of electric regenerative braking will be measured and sent to the emulation device (DVE in the Loop), which will use it to calculate, together with the emulation of conventional ABS braking, the longitudinal and lateral dynamic response of the vehicle.
- Within the emulation device (DVE in the loop) and related to its 'Environment' part, the emulation of different terrain characteristics in real time should be mentioned, such as: dry asphalt, wet asphalt, ice, etc., and the calculation based on curves/graphs of the corresponding coefficients of friction. Furthermore, curves, banking and stretches with slopes, as well as common traffic signals will be reproduced. Virtual real scenarios can be reproduced in this device so that the driving is realistic.
- Within the emulation device (DVE in the loop), and related to its Driver part, the incorporation of a driver model which allows automating the tests assuring repeatability for the purpose of testing/adjusting/optimizing the different energy strategies, must be mentioned. This model could also be bypassed and tests in which the driver is a person acting on the vehicle control panel and driving in the reproduced virtual scenarios could be performed.
- Having the emulation device (DVE in the loop) emulating in real time the vehicle, the environment, and the driver, allows sending state variables from this device to the energy management system, such as the real vehicle speed, current vehicle position, or even variables that will occur in the future (electronic horizon) such as upcoming traffic signals, upcoming slopes or curves of the terrain, etc. These signals could be processed by the energy management system and the benefits that can be obtained with their knowledge and processing could thus be evaluated for optimizing the energy strategy and deciding if it is worth including said sensors in the end vehicle depending on the obtained benefits.
- The interface device (interface of the testing system/drive system to be tested) allows the interconnection at the control level between the subsystems/exchanges (ECUs, electronic control units of the vehicle) of the drive system to be tested and the proposed testing system.

### Brief Description of the Drawings

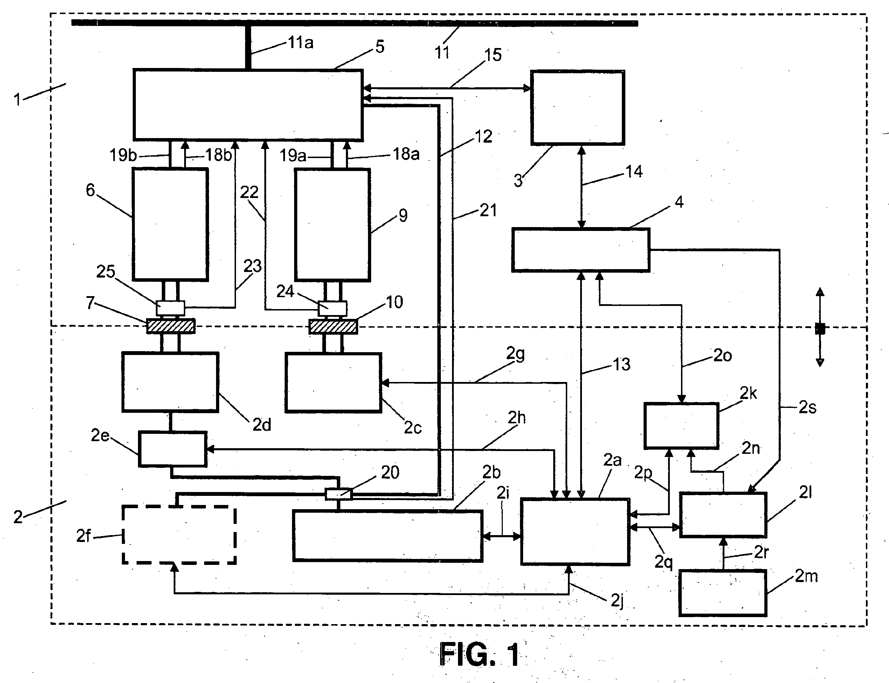

Aspects and embodiments of the invention are described below based on a set of drawings, in which
Figure 1 is a block diagram of an embodiment of the system according to the present invention connected to the main components/subsystems of a hybrid-electric drive system of an automotive vehicle;

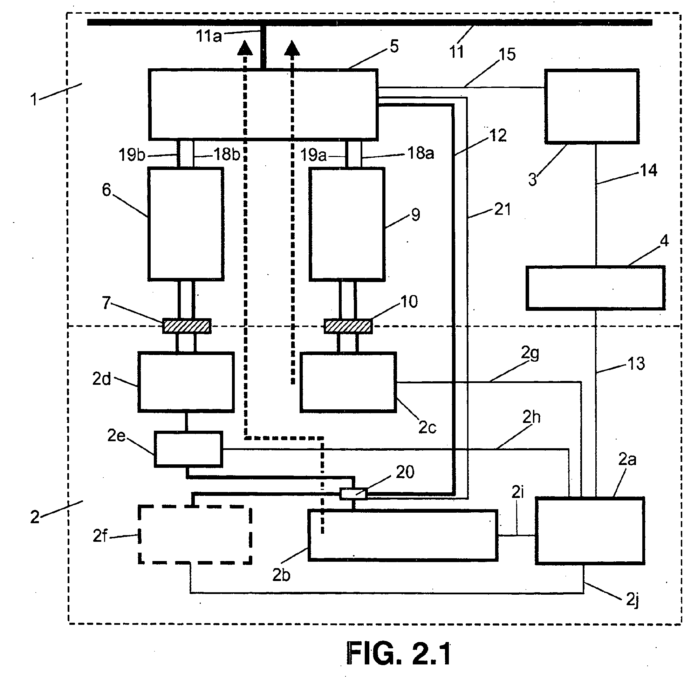

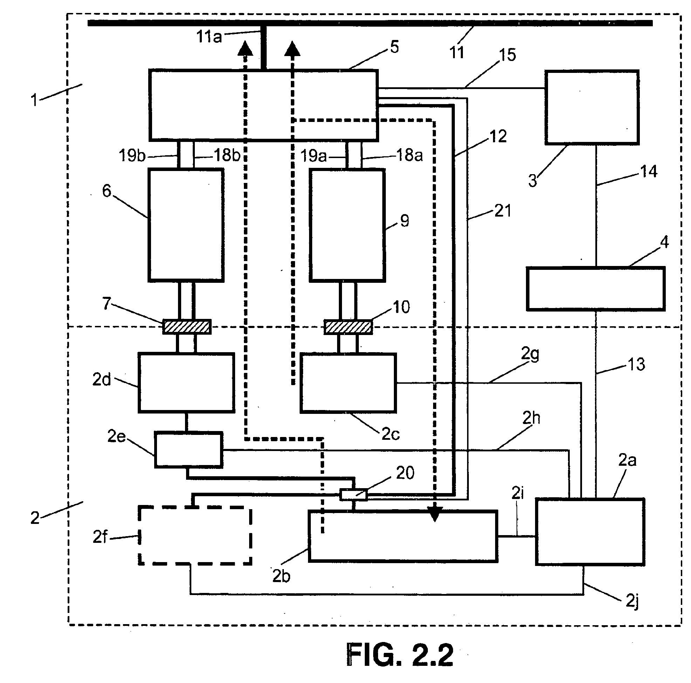

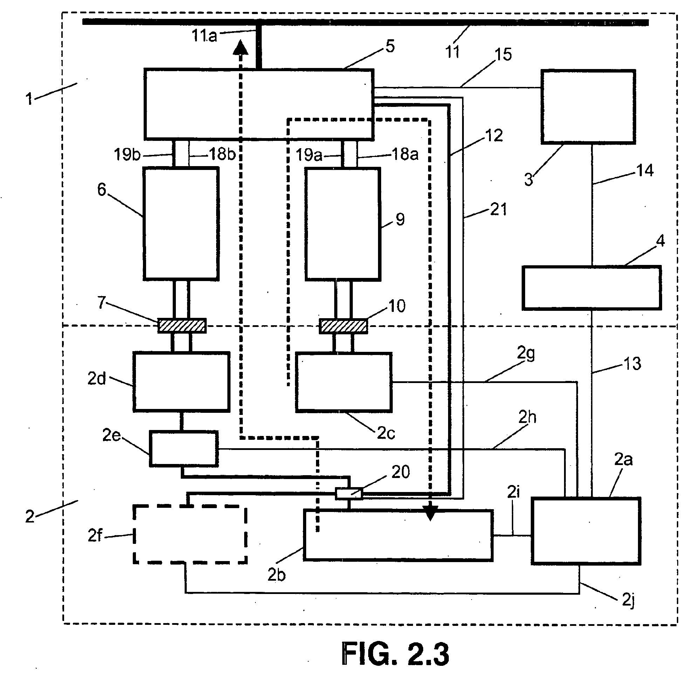

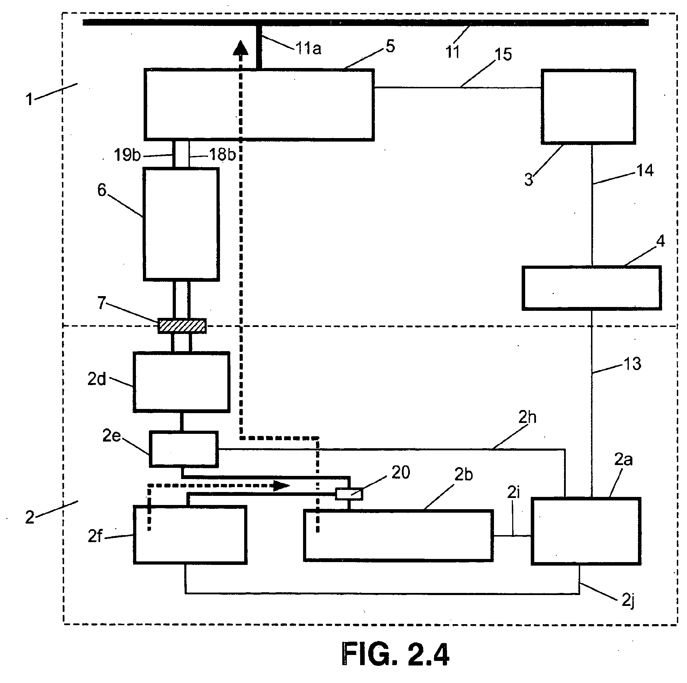

Figures 2.1, 2.2, 2.3, 2.4 show the possible energy fluxes depending on the hybridization architecture and/or operating mode selected according to the energy strategy to be tested. It should be pointed out that in all the operating modes, it is the emulation device (3) which calculates the resistance torques to be imposed on each electric machine (9, 6) depending on the driving that is being performed, on the model of the vehicle, on the model of the coupling system and on the torque and speed measurements of the electric machine (2d) and of the internal combustion machine (2c) coming from the energy conversion device (5) through the connection (15).
Figure 2.1 (arrow with dotted lines) shows the energy flux when, between the electric machine (2d) and the internal combustion machine (2d), and depending on the distribution decided by the energy management subsystem (2a), the total mechanical power demanded by the driver (parallel mode) is provided.
Figure 2.2 shows the energy flux (arrows with dotted lines) when in parallel mode, the internal combustion machine (2d) further provides extra mechanical power, the value of which is decided by the energy management subsystem (2a), which, through the second electric machine EM2 (9) operating like an electric generator, is used for the auto-recharge of the block of batteries (2b). If there is a difference in terms of the energy efficiency map of the second electric machine (9) with respect to the electric generator which the internal combustion machine (2d) finally has coupled thereto, this extra amount of energy would be taken into account in the calculations to be performed by the emulation device (3).
Figure 2.3 shows the energy flux (arrows with dotted lines) when the vehicle is driven in electric mode but the electric energy necessary is generated partially or entirely by the internal combustion machine (2c) through the second electric machine (9) and the electric energy conversion device (5) (series mode). The amount of electric energy generated by the internal combustion machine (2c) second electric machine (9) - energy conversion device (5) assembly will be decided by the energy management subsystem (2a) to be tested, the remaining electric energy necessary being supplied by the block of batteries (2b). Depending on the degree of hybridization installed and if the strategy implemented in the energy management subsystem (2a) requires it, even the internal combustion machine (2c) - second electric machine (9) - energy conversion devices (5) assembly could provide the energy necessary to drive the vehicle and extra energy for the auto-recharge of the block of batteries (2b).
Figure 2.4 shows the energy flux (arrows with dotted lines) corresponding to the architecture corresponding to a strictly electric drive system which has incorporated therein range expansion unit (2f) connected in a controlled manner to the power distribution box (20) of the hybrid drive system of the vehicle (for example a fuel cell, a small combustion engine-generator-rectifier assembly, or even a high power density ultra-capacitor system). The mechanical power demanded by the vehicle/driver is provided by the electric machine (2d), supplying the necessary electric energy between the block of batteries (2b) and the range expansion unit (2f). The distribution between both is decided by the energy management subsystem (2a), which could even decide that the range expansion unit (2f) will generate more energy/electric power that what is necessary for the auto-recharge of the block of batteries (2b).

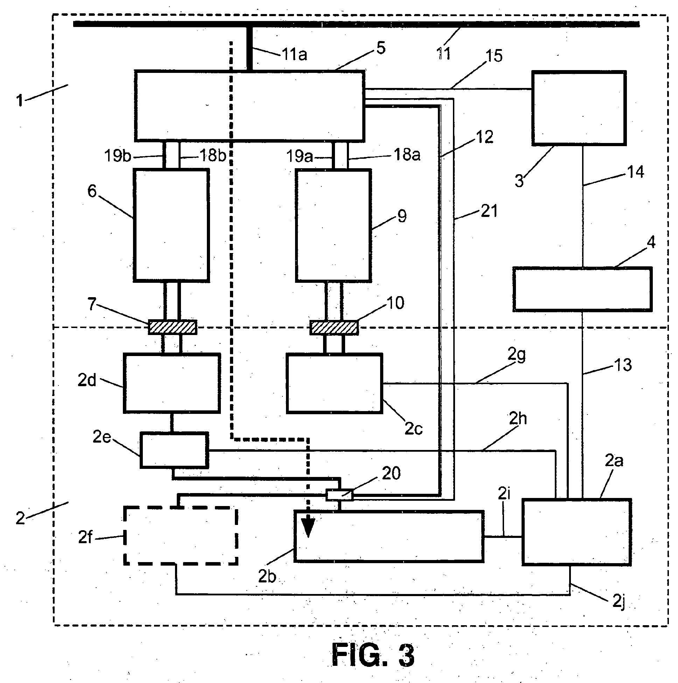

Figure 3 shows the energy flux (arrow with dotted lines) when the vehicle is braking and there is energy recovery due to the effect of regenerative braking.

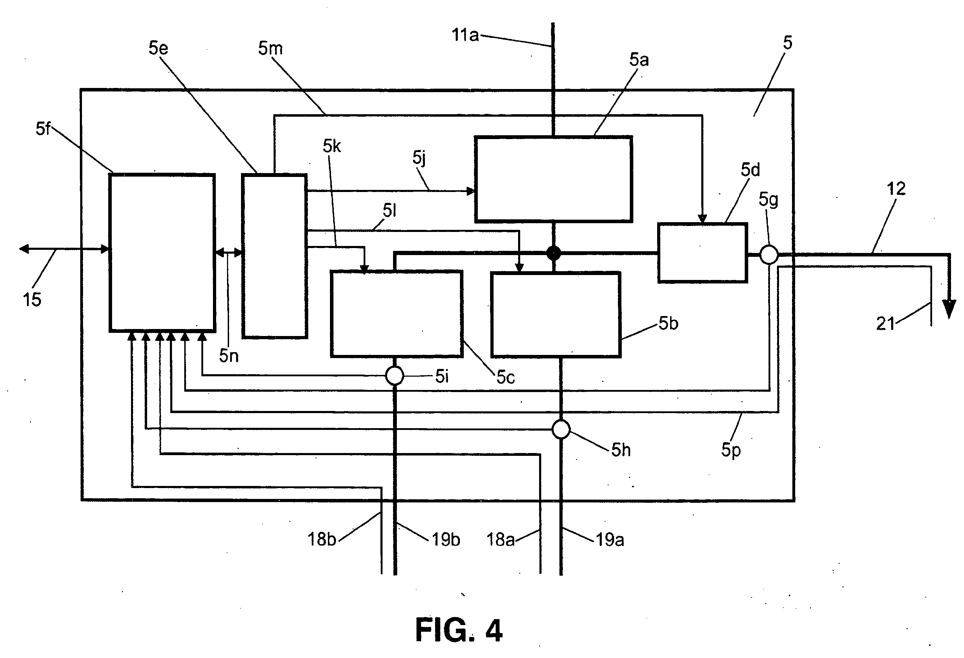

Figure 4 shows a block diagram of an embodiment of an electric energy conversion device (5) for the system shown in Figure 1.

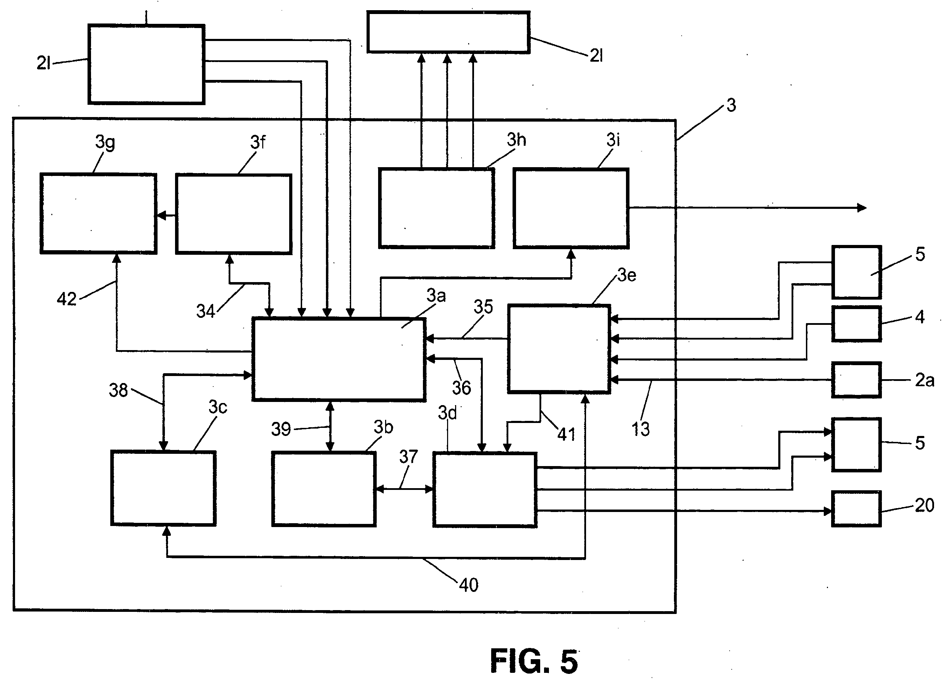

Figure 5 shows a scheme of the emulation device (3).

Reference numbers identifying the following elements can be seen in this drawings:
- 1: Test bench
- 2: Hybrid-electric drive system (to be tested)
- 2a: Energy management subsystem (energy management strategy to be tested)
- 2b: Block of batteries (to be tested)
- 2c: Internal combustion machine (to be tested)
- 2d: Electric machine (to be tested)
- 2e: Power inverter (of the electric machine to be tested)
- 2f: Range expansion unit (to be tested)
- 2g: Energy management subsystem/internal combustion machine control connection
- 2h: Energy management subsystem/power inverter control connection
- 2i: Energy management subsystem/block of batteries control connection
- 2j: Energy management subsystem/possible range expansion unit control connection
- 2k: Brake management subsystem of the vehicle (to be tested)
- 2l: Control panel management subsystem.
- 2m: Vehicle control panel. Gas, Brake, Steering wheel position
- 2n: Control panel management subsystem/brake management subsystem control connection
- 2o: Brake management subsystem/interface device control connection
- 2p: Energy management subsystem/brake management subsystem control connection.
- 2q: Energy management subsystem/control panel management subsystem control connection.
- 2r: Control panel/control panel management subsystem control connection.
- 2s: Interface device/control panel management subsystem control connection.
- 3: Emulation device (DVE in real time of the vehicle, environment and driver).
- 3a: Model emulating the longitudinal/lateral dynamic performance of the vehicle.
- 3b: Model emulating the performance of a continuous variable transmission (CVT).
- 3c: Model emulating the performance of the braking system (ABS).
- 3d: Model emulating the performance of a coupling system for the internal combustion machine (2c) and electric machine (2d) towards the output shaft of the wheels.
- 3e: Signal reception/FeedBack variable block.
- 3f: Virtual scenario model.
- 3g: Vehicle and scenario display.
- 3h: Driver model.
- 3i: Variable recording block.
- 34: Internal connection between 3a and 3f
- 35: Internal connection between 3a and 3e
- 36: Internal connection between 3a and 3d.
- 37: Internal connection between 3b and 3d.
- 38: Internal connection between 3a and 3c.
- 39: Internal connection between 3a and 3b.
- 40: Internal connection between 3c and 3e.
- 41: Internal connection between 3d and 3e.
- 42: Internal connection between 3a and 3g.
- 4: Interface device between the emulation device of the test bench and the energy management, brake management and control panel management subsystems of the hybrid-electric drive system of the vehicle.
- 5: Electric energy conversion device (of the test bench)
- 5a: Two-way AC/DC converter
- 5b: Second DC/AC inverter
- 5c: First DC/AC inverter
- 5d: DC/DC step-down converter
- 5e: Module containing the firing circuits of the power semiconductors.
- 5f: Control unit based on DSPs (Digital Signal Processor)
- 5g: Current sensor at the output of the DC/DC step-down converter
- 5h: 3 Current sensors connected to the output of the second inverter
- 5i: 3 Current sensors connected to the output of the first inverter
- 5p: Voltage sensor connection installed in the power distribution and junction box HVDC-link.
- 5j: Power semiconductor firing module/two-way AC/DC converter control connection
- 5k: Power semiconductor firing module/ DC/AC inverter 1 control connection
- 5l: Power semiconductor firing module/ DC/AC inverter 2 control connection
- 5m: Power semiconductor firing module/ DC/DC step-down converter control connection
- 5n: Control unit based on DSPs/power semiconductor firing module control connection
- 6: First electric machine (of the test bench).
- 7: First direct mechanical coupling.
- 9: Second electric machine (of the test bench)
- 10: Second direct mechanical coupling
- 11: Three-phase current supply connection
- 11a: Constant frequency alternating (three-phase) current input (connection).
- 12: Direct current power connection.
- 13: Interface device/energy management subsystem control connection.
- 14: Interface device/emulation device DVE control connection
- 15: Emulation device/electric energy conversion device control connection
- 18a: Second electric machine position sensor connection to electric energy conversion device.
- 18b: First electric machine position sensor connection to electric energy conversion device.
- 19a: Variable frequency and magnitude alternating current output (connection) of the electric energy conversion device to the second electric machine.
- 19b: Variable frequency and magnitude alternating current output (connection) of the electric energy conversion device to the first electric machine.
- 20: Power distribution and junction box (HVDC-link direct bus distributor module) of the hybrid-electric drive system.
- 21: Voltage sensor connection installed in the HVDC-link/electric energy conversion device.
- 22: Control connection of the torque sensor installed in the second electric machine to the electric energy conversion device.
- 23: Control connection of the torque sensor installed in the first electric machine to the electric energy conversion device.
- 24: Torque sensor installed in the shaft of the second electric machine.
- 25: Torque sensor installed in the shaft of the first electric machine.

### Embodiments of the Invention

In the embodiment shown in Figure 1, the system according to the present invention includes a test bench -1- with a real time emulation device DVE -3-, with an electric energy conversion device -5-, a first electric machine -6-, a first direct mechanical coupling -7-, a second electric machine -9-, a second direct mechanical coupling -10-, and an interface device -4- for connecting, at a control and supervision level, the test bench -1- with a hybrid-electric drive system -2- to be tested.

The electric energy conversion device -5- performs different controlled variable voltage, current and frequency conversions. It is connected to a three-phases power supply connection -11- through a constant frequency alternating current input -11 a- and has an alternating current output connected to the first electric machine, -6-through a first alternating current connection -19b-, an alternating current output to connected to the second electric machine -9- through a second alternating current connection -19a-, and a direct current power output -12- connected to a directs current power connection of the power distribution and junction box (HVDC-link or high-voltage DC bus) -20- of the hybrid-electric drive system -2-. The electric energy conversion device -5- is connected, through the control connection -15-, with an emulation device DVE -3-, through the control connection -22- to a second torque sensor -24- installed in the shaft of the second electric machine -9-, through the control connection -23- to a first torque sensor -25- installed in the shaft of the first electric machine -6-, through the control connection -18a- to an angular position sensor of the rotor of the second electric machine -9-, and through the control connection -18b- to an angular position sensor of the rotor of the first electric machine -6-.

The emulation device DVE -3- emulates in real time the longitudinal and lateral dynamic response of the vehicle taking into account the driving that is being performed by a current driver or emulated on a virtual driving environment. This emulation device -3- calculates all the longitudinal, vertical and lateral force vectors occurring in the drive wheels of the vehicle and obtains in real time the position of the center of gravity of the vehicle in the three coordinate axes (x, y, z) on a fixed coordinates system, and in the three angles relating to the system (yaw, pitch, roll) on a mobile reference system placed in the center of gravity of the vehicle. This emulation device -3-, implemented on a real time computation and control system, also calculates and imposes the resistance torque references (equivalent to all the forces opposing the force made by the drive system of the vehicle) to be imposed on the shafts of the internal combustion machine -2c- and of the electric machine -2d-by means of the first electric machine -6- and second electric machine -9-. To that end (calculation of the force vectors in the wheel, calculation of the position of the vehicle, and calculation of the equivalent resistance torques in the shafts of the machines 2c and 2d), the device DVE -3- uses: 1: A model emulating the longitudinal and lateral dynamic performance of the vehicle to be emulated given the driving cycle which is being carried out by an actual driver or emulated on a virtual driving scenario, 2: the current torque and speed measurements of the mechanical power suppliers (the internal combustion machine -2c- and the electric machine -2d-) obtained from the energy conversion device -5-, 3: A model emulating the performance of a continuous variable transmission (CVT), if there is one, 4: A model emulating the performance of a coupling system between both mechanical drive power suppliers (internal combustion machine -2c- and electric machine -2d-), and transmitting the resulting torque to the shaft of the wheels, and 5: The operating modes (series, parallel, strictly electric, electric with range expansion) and power distributions decided and selected by the energy management subsystem -2a-. This emulation device -3- is connected through a control connection -15- to the electric energy conversion device -5-, and through the control connection -14- to an interface device -4-.

In turn, the hybrid-electric drive system to be tested -2- comprises an energy management subsystem (its own exchange or function incorporated in another exchange) -2a- to be tested, optimized or validated in which the energy management strategy to be tested/optimized/validated according to the architecture and operating modes of the hybrid-electric drive system to be tested is programmed, a block of batteries -2b- to be tested, an internal combustion machine -2c- to be tested, an electric machine -2d- to be tested, a power inverter -2e- controller of the electric machine -2d- to be tested and a(n) (optional) range expansion unit (2f) to be tested. The energy management subsystem to be tested -2a- is connected, by means of respective control connections -2g, 2h, 2i, 2j-, to the block of batteries -2b-, to the internal combustion machine -2c-, to the power inverter -2e- and to the range expansion unit (2f), and by respective control connections -2p, 2q- to the brake management subsystem (their own exchanges or functions incorporated in other exchanges) -2k- and control panel management subsystem -21-. The direct current power connection -12- shares an electrical high-voltage DC (direct current) power connection with the block of batteries -2b-, the power inverter -2e- and with the range expansion unit -2f- through the direct current power distribution and junction box -20-(high-voltage DC bus or HVDC-link). The control connection -2r- also connects the vehicle control panel (gas, brake, steeping wheel) -2m- to the control panel management subsystem -21- and the control connection -2n- connects the control panel management subsystem -21- with the brake management subsystem -2k-.

The interface device -4- connects the emulation device DVE -3- with the energy management subsystem -2a- through respective control connections -13,14-, and is responsible, on one hand, for sending to the emulation device DVE -3- the orders and power distributions being calculated by the energy management subsystem -2a- depending on the strategy incorporated therein, and on the other hand for sending from the emulation device DVE -3- to the energy management subsystem -2a- the state variables of the current or even future vehicle, driver or environment (for example current vehicle speed, current vehicle position, course and future traffic signals, etc.), needed or not by the energy management system -2a-depending on the energy strategy implemented therein or to be validated or optimized. The interface device -4- also connects the emulation device DVE -3- with the brake management subsystem -2k- through the connection -2o- and with the control panel management subsystem -2l- through the connection -2s-. On one hand, the emulation device DVE -3- sends to the brake management subsystem -2k-the vehicle variables which said subsystem needs to coordinate braking, and the brake management subsystem -2k- sends to the emulation device DVE -3- the ABS braking orders so that they are used for emulating the ABS system through the model -3c-. On the other hand, the emulation device DVE -3- sends to the control panel management subsystem -2l- the emulated gas, brake, and steering wheel signals so that they are selected in the event that the virtual driver model -3h-implemented in the emulation device DVE -3- is used.

As can be seen, the hybrid-electric drive system -2- is mechanically connected to the test bench -1- by means of a first direct mechanical coupling -7-which couples the electric machine -2d- to the first electric machine -6- of the test bench -1-, and a second direct mechanical coupling -10- which couples the internal combustion engine -2c- to the second electric machine -9- of the test bench -2-. The hybrid-electric drive system to be tested -2- is also electrically connected through the electric power connection -12- which connects the electric energy conversion device -5- with the power distribution and junction box corresponding to the high-voltage DC bus (HVDC-link) -20-, electronically connected with a control connection -21- which connects the voltage sensor installed in the power distribution and junction box -20-to the electric energy conversion device -5-, and electronically connected to the interface device -4- from the energy management subsystem -2a- through the control connection -13-, from the brake management subsystem -2k- through the connection -2o-, and from the control panel management subsystem -21- through the connection -2s-.

In the embodiment illustrated in Figure 4, the electric energy conversion device -5- comprises a two-way AC/DC converter -5a- connected through its input to the three-phase alternating current input (connection) -11a-, through one of its direct current outputs to a DC/DC step-dowri converter -5d-, through another one of its direct current outputs to a second DC/AC inverter -5b- connected to the second alternating current output -19a-, and through the other direct current output to a first DC/AC inverter -5c- connected to the first alternating current output -19b-. The AC/DC converter -5a-, the second DC/AC inverter -5b-, the first DC/AC inverter -5c- and the DC/DC step-down converter -5d- receive control signals from a module containing the firing circuits (of power semiconductors) -5e- whereby they are connected through respective control connections -5j, 5k, 5l, 5m- and the one which is in turn connected to a control unit based on one or more DSPs (Digital Signal_ Processor) -5f-. The control unit -5f- also receives signals from a current sensor -5g- connected to the output of the DC/DC step-down converter -5d-, from 3 current sensors -5h- connected to the second alternating current output -19a-, from 3 current sensors -5i- connected to the first alternating current output -19b-, from the voltage measurement connection in the direct current bus HVDC-link -5p- of the drive system -2- to be tested, from the control connection -18a- connected to the position sensor of the second electric machine -9-, and from the control connection -18b- connected to the position sensor of the first electric machine -6-. On the other hand, the control unit -5f- receives actuation signals and sends state signals through the control connection -15- which connects it with the emulation device DVE -3-. The following are housed in the control unit -5f-:
1: the algorithms performing torque control of the first electric machine -6- by means of the first DC/AC inverter -5c-. This control is performed based on the current readings performed by the 3 current sensors -5i- installed in the three phases of alternating current output of the first inverter -5c- and by position value reading performed by the sensor connected through the connection -18b-. The purpose is to control the torque of the electric machine - 2d- so that it is equal to the reference resistance torque calculated by the emulation device DVE -3- and sent to the control unit -5f- through the control connection -15-. The regulation of the torque is performed based on the regulation of the stator currents of the first electric machine - 6- the reference values of which will be calculated by the control unit -5f- depending on the parameters of the electric machine -6- and subsequent adjusted according to the actual torque measurements obtained by means of the first torque sensor -25-installed in the shaft of the first electric machine -6.-. The torque of the first electric machine -6- can be positive or negative, the speed being able to be both positive and negative.
2: the algorithms performing the torque control of the second electric machine -9- by means of the second DC/AC inverter -5b-. This control is performed based on the current readings performed by the 3 current sensors -5h- installed in the three phases of alternating current output of the second inverter -5b- and by the position value reading performed by the sensor connected through the connection -18a=. The purpose is to control the torque of the second electric machine -9- so that it is equal to the reference resistance torque calculated by the emulation device DVE -3- and sent to the control unit -5f- through the control connection -15-. The regulation of the torque is performed based on the regulation of the stator currents of the second electric machine -9- the reference values of which will be calculated by the control unit -5f- depending on the parameters of the second electric machine -9- and subsequently adjusted according to the actual torque measurements obtained by means of the second torque sensor -24- installed in the shaft of the second electric machine -9-. The torque of the second electric machine -9- can be positive or negative, though in this case the speed is always of the same direction and corresponds with the only rotation direction in which the internal combustion machine -2c- can rotate.
3: the algorithms controlling the output voltage of the two-way AC/DC converter -5a-, keeping it stable and at the corresponding value so that the remaining energy conversion stages work correctly. These algorithms will assure the two-way nature of the AC/DC converter -5a-, so the current in this converter could be both positive and negative and the electric power could therefore be positive (the three-phase network -11- delivers power/energy to the test bench -1-) or negative (the test bench -1- returns power/energy to the three-phase network -11-).
4: the algorithms controlling the output voltage of the DC/DC step-down converter -5d-. This control is performed based on the readings of the connection - 21, 5p- from a voltage sensor installed in the DC (direct current) power distribution and junction box or HVDC-link -20- and the readings of the current sensor -5g- installed in the direct current output of the DC/DC step-down converter -5d-. The purpose of this control is to deliver the electric power calculated according to the energy strategy being tested in the energy management subsystem -2a- to the HVDC-link -20-.
5: the calculation of all the firing orders to the power semiconductor elements installed in the different conversion stages -5a, 5b, 5c,5d-.
6: sending to the emulation device DVE -3- through the control connection - 15- the feedback variables corresponding to the: 1: torque, obtained through the connections -22, 23- of the torque sensors -24, 25- , 2: speed, obtained based on the integration of the angular position of the rotor, sensors -18a, 18b-, and 3: current, obtained by means of the current sensors -5h, 5i- of the first electric machine -6- and second electric machine -9-.
7: receiving from the emulation device DVE -3- through the control connection -15- the torque references to be imposed on the first electric machine -6- and second electric machine -9-, and the power reference to be sent to the power distribution box DC-link -20- through the converter DC/DC -5d-.

Relating to the embodiment of the first electric machine -6-, the latter has a maximum torque-speed characteristic which covers all the possible points of operation (torque, speed) in which the electric machine -2d- controlled by the power inverter -2e- of the hybrid-electric drive system -2- to be tested can work.

Relating to the embodiment of the second electric machine -9-, the latter has a maximum torque-speed characteristic which covers all the possible points of operation (torque, speed) in which the internal combustion machine -2c- of the hybrid-electric drive system -2- to be tested can work.

In the embodiment depicted in Figure 5, the emulation device DVE -3-, is programmed in a real time computation and control system, and includes a model emulating the longitudinal and lateral dynamic performance of the vehicle -3a-, a virtual real scenario model -3f-, a vehicle and driving scenario display -3g-, a model emulating a driver who is driving on the selected scenario -3h-, a model emulating a continuous variable transmission (CVT) -3b-, a model emulating the performance of a conventional (ABS) braking system -3c-, a model emulating the performance of a coupling system for the electric machine -3d- and the internal combustion machine -3c- towards the output shaft of the wheels (and reference calculator) -3d-, a signal reception/feedback variable block -3e-, and a variable recording block -3i-. These models are interconnected as depicted in Figure 5.

The model emulating the longitudinal and lateral dynamic performance -3a-has implemented therein the differential equations representing the longitudinal and lateral dynamics of the vehicle which are solved by means of numerical integration. It is a three-body model. The model solves and obtains in real time all the longitudinal, vertical and lateral forces (vectors) occurring in the drive wheels due to the effect of the movement of the vehicle, further obtaining the absolute position of the center of gravity of the vehicle in the coordinates (x,y,z) on a fixed reference system, and the angular position thereof relating to the three angles (yaw, pitch and roll) on a mobile reference system placed in its center of gravity. To that end, the following are used: 1: the inputs corresponding to the current drive (longitudinal) torques relating to the shaft of the drive wheels calculated by the model emulating the performance of the coupling system -3d- and obtained through the internal connection -36-, 2: the inputs corresponding to the gas ant brake pedals and steering wheel position obtained from the control panel management subsystem -2l- through the interface device -4- and the connections - 2s, 14, 35-, 3: the emulated response, relating to the braking torques in the wheels, through the model emulating the performance of the conventional ABS braking system of the vehicle -3c- and received through the internal connection - 38-, 4: the multiple dynamic parameters representing the vehicle such as front section, weight, diameters, distance between shafts, tire parameters, aerodynamic coefficients, suspension parameters, roll centers, etc., and the information or parameters of the environment/course on which the vehicle is being driven (coefficients of friction, slopes, etc.) coming from the internal connection -34-. The contact between tire and road has been modeled paying special attention including the non-linear sections, using curves which characterize different types of tires.

The model emulating the performance of the continuous variable transmission CVT -3b- and the coupling system model -3d- prevent needing to have of variable transmission CVT mechanical systems (continuous variable transmission) as well as planetary-type couplings in the test bench -1-.

The model emulating the performance of the continuous variable transmission CVT -3b- can reproduce the performance of a CVT by calculating/deciding the value of the transmission ratio (from among those existing according to the CVT to be emulated) to be imposed between the shaft of the internal combustion machine -2c- and the output shaft towards the drive wheel transmission system. This selected transmission ratio is sent to the model block of the coupling system and reference calculator -3d- through the connection -37-. The CVT model -3b- will select the transmission ratio to be imposed depending on the torque and speed state variables (actual measurements) of the internal combustion machine -2c- received from the dynamic model -3a- through the internal connection -39- which in turn receives it from the block -3e- through the connection -35-. Different alternatives or laws can be implemented in this model for selecting the best time to change and select the transmission ratio values to evaluate the incidence thereof in the energy efficiency of the hybrid drive system to be tested.

The model emulating the performance of the coupling system (and reference calculator block TPREF) -3d- is interconnected with the dynamic model of the vehicle -3a- by means of the connection -36-. This model -3d- performs two functions. In a first function, it calculates the current drive longitudinal torques relating to the shaft of the drive wheels. To that end this model -3d- uses: 1: The current torque measurements in the shaft of the internal combustion machine -2c-(torque sensor -24-) and in the shaft of the electric machine -2d- (torque sensor - 25-) obtained from the electric energy conversion device -5- through the connection -15-, the feedback signal model -3e- and the connection -41-, 2: The transmission ratios selected by the model emulating the performance of the continuous variable transmission CVT -3b- received through the internal connection -37-, 3: The transmission ratio value existing between the shaft of the electric machine -2d- and the output shaft towards the drive wheel transmissiori system, 4: Different static and dynamic parameters which characterize the coupling system, such as friction, allowances, etc. , and 5: The operating modes (series, parallel, strictly electric, electric with range expansion, etc.) and distribution of powers in each of the modes decided and selected by the energy management subsystem to be tested -2a-, which are received through route -2a, 13, 4, 14, 3e, 41-.

In a second function, the model emulating the performance of the coupling system (and reference calculator) -3d- calculates the equivalent resistance torques relating to the shafts of the machines of the main mechanical power suppliers (machines -2d- and -2c-) and they are sent to the electric energy conversion device -5- through the connection -15- so that the latter can impose them in a controlled manner (emulating the performance of an actual CVT and coupling system) in the shafts of the machines -2d- and -2c- through the machines -6- and - 9- respectively. To that end, the model -3d- receives the resistance torques (opposing the drive force of the vehicle) relating to the shaft of the drive wheels, calculated by the model emulating the longitudinal and lateral dynamic performance -3a- through the connection -36-, and transforms them into resistance torque variables in each of the shafts of the machines -2c- and -2d- using: 1: The transmission ratios selected by the model emulating the performance of the CVT -3b- received through the internal, connection -37-, 2: The transmission ratio value existing between the shaft of the electric machine -2d- and the output shaft towards the drive wheel transmission system, 3: Different static and dynamics parameters which characterize the coupling system, such as friction, allowances; etc., and 4: The operating modes (series, parallel, strictly electric, electric with range expansion, etc.) and the distribution of powers in each of the modes decided and selected by the energy management subsystem to be tested -2a-, which are received through the route -2a, 13, 4, 14, 3e, 41-.

The reference calculator block of the model -3d- also calculates in the second function the power reference to be sent to the power distribution and junction box HVDC-link -20- depending on the decision made by the energy management subsystem -2a- received through the interface device -4- by means of the connections -13, 14- and -41-. This reference calculator block sends said calculated power reference to the electric energy conversion device -5- through the connection 15- so that it can impose said reference in the DC/DC conversion stage -5d-.

The model emulating the performance of the braking system ABS -3c-emulates in real time the performance of the conventional ABS braking by sending the emulated response to the model emulating the longitudinal and lateral dynamic performance -3a- through the internal connection -38-. To that end, it receives the inputs corresponding to the commanding orders of the ABS system from the brake management subsystem -2k- through the interface device -4- and the connections -2o- and -14- and the internal connection -40-. The subsystem of the vehicle performing the management/synchronization between both braking possibilities - 2k- can thus be tested, and the overall vehicle braking performance and the incidence thereof in the longitudinal and lateral response thereof can be emulated in real time by the emulation device DVE -3-.

The feedback signal block -3e- is responsible for receiving the torque measurement (sensor -24- and -25-) and speed measurement (sensors of position -18b- and -18a- numerically integrated over time) of the electric machines -6- and - 9- coming from the electric energy conversion device -5- through the connection - 15-, and for receiving the signals/variables of the subsystems -2a-, -2k- and -2m-coming from the interface device -4- through the connections -13, 2o, 2s- and -14-. The measurements and variables received are shared by the different models -3a, 3b, 3c, 3d- making up the device DVE -3- through the different internal connections depicted in Figure 5.

The virtual scenario model -3f- allows emulating different terrain characteristics in real time, such as for example, dry asphalt, wet asphalt, ice, etc., and the calculation based on curves/graphs of the corresponding coefficients of friction. These variables are sent to the model emulating the longitudinal and lateral dynamic performance -2a- through the connection -34-. Furthermore, curves, banking and stretches with slopes, as well as common traffic signals will be reproduced. Virtual real scenarios can be reproduced in this device so that the driving is realistic.

The vehicle and scenario display block -3g- is responsible for displaying in real time on a graphic display the vehicle in motion on the scenario on which it is moving. The position of the vehicle in its six coordinates (x,y,z, yaw, pitch, roll) is calculated by the dynamic model -3a- and sent to the display block -3g- through the internal connection -42-.

The driver model -3h- allows automating the testing and assuring the repeatability for the purpose of testing/adjusting/optimizing the different energy strategies. It is responsible for generating or emulating the actions of a virtual driver (position of the gas, position of the brake and position of the steering wheel) and sending them to the control panel management subsystem -2l- through the interface device -4- by means of the control connections -14- and -2s-. If the virtual driver mode is selected, the control panel management subsystem -2l- will select the inputs received from the driver model -3h- instead of those received from the control panel -2m- corresponding to the controls (gas, brake, steering wheel) actuated by an actual driver.

The variable recording block -3i- is interconnected with the dynamic model of the vehicle -3a- and is responsible for sending all the important state variables from the dynamic and energy point of view to a central data acquisition and recording system to later perform the corresponding analyses of the tests performed.

Relating to the embodiment of the interface device -4-, the latter allows adapting and interconnecting the emulation device DVE -3- with the subsystems of the hybrid-electric drive system to be tested -2- corresponding to the energy management subsystem (its own exchange or function incorporated within another exchange) EMS -2a-, the brake management subsystem (its own exchange or function incorporated within another exchange) -2k-, and the control panel management subsystem (its own exchange or function incorporated within another exchange) -2m-. In this device, which acts as a gateway, communications protocols are adopted so that the variables shared (sending/receiving) between the emulation device DVE -3- and the subsystems of the hybrid-eloctric driven system -2a, 2k, 2m- through the connections -13, 2o, 2s- are interpreted and understood in both parts. The interface device -4- will generally incorporate the adaptation of the communications protocols to application level on the CANbus, and/or Flexray communications buses, which are the most widely used in the automotive sector today, though there can be variables to be shared within these control connections which can be exchanged via physical inputs/outputs, in which case the interface device -4- also has the adaptation hardware necessary for adapting the electric levels of the variables/signals which must be shared between the devices.

## Claims

1. System for testing and evaluating the performance and energy efficiency of a hybrid-electric drive system (2) of an automotive vehicle, comprising a test bench (1) controlled by an emulation device (3) which can emulate driving the vehicle in real time, the test bench (1) being mechanically connectable to an internal combustion machine (2c) and to an electric machine (2d) of the hybrid-electric drive system (2) to be tested, **characterized in that** the test bench (1) comprises:
a first electric machine (6) that can be coupled to the electric machine (2d) of the hybrid-electric drive system (2) by means of a first direct mechanical coupling (7);
a second electric machine (9) that can be coupled to the internal combustion engine (2c) of the hybrid-electric drive system (2) by means of a second direct mechanical coupling (10);
an electric energy conversion device (5) adapted to control the torque that can be provided by the first electric machine (6) and the torque that can be provided by the second electric machine (9) and the power to be delivered to a power distribution and junction box (20) containing the direct current bus of the hybrid-electric drive system (2) and
a control connection (15) which is adapted to connect the electric energy conversion device (5) with the emulation device (3);
and **in that** the emulation device (3) is adapted to calculate the resistance torque applied by the first electric machine (6) on the shaft of the electric machine (2d) and the resistance torque applied by the second electric machine on the shaft of the internal combustion machine (2c) and the power to be delivered to the power distribution and junction box (20) containing the direct bus, through the energy conversion device (5), depending on the resistance forces which oppose the drive forces due to the effect of the emulated driving of the vehicle and of the operating mode of the hybrid-electric drive system during the test.

2. System according to claim 1, wherein the test bench (1) is connectable, through an interface device (4), to an energy management subsystem (2a), to a brake management subsystem (2k), and to a control panel management subsystem of the vehicle (2l), of the hybrid-electric drive system to be tested (2).

3. System according to any of the previous claims, comprising a first torque sensor (25) installed in the shaft of the first electric machine (6) and a first control connection (23) which is adapted to connect the mentioned first torque sensor (25) with the electric energy conversion device (5).

4. System according to any of the previous claims, comprising a second torque sensor (24) installed in the shaft of the second electric machine (9) and a second control connection (22) which is adapted to connect the mentioned second torque sensor (24) with the electric energy conversion device (5).

5. System according to any of the previous claims, wherein the electric energy conversion device (5) comprises a constant frequency alternating current input (11 a), a first variable frequency and magnitude alternating current output (19b) connected to the first electric machine (6), a second variable frequency and magnitude alternating current output (19a) connected to the second electric machine (9), and a direct current power output (12) connected to the power distribution and junction box (20) of the hybrid-electric drive system (2).

6. System according to claim 5, wherein the electric energy conversion device (5) comprises a two-way AC/DC converter (5a) connected through its input to the alternating current connection input (11 a) and, through its direct current output, to the power distribution box (20), through a DC/DC step-down converter (5d), to a first DC/AC inverter (5c) connected to the first electric machine (6) through the first alternating current output (19b) and to a second DC/AC inverter (5b) connected to the second electric machine (9) through the second alternating current output (19a) and wherein:
the AC/DC converter (5a), the first DC/AC inverter (5c), the second DC/AC inverter (5b) and the DC/DC converter (5d) are adapted to receive firing signals from a module (5e) containing the firing circuits and which is in turn connected to a control unit based on DSP (5f) controlling the static and dynamic response of the electric energy conversion stages of the electric energy conversion device (5) and are adapted to perform the controls of the first and second electric machines (6,9) and the control of the power delivered to the power distribution and junction box (20) containing the direct current bus of the hybrid-electric drive system (2), all depending on the guidelines received from the emulation device (3) through the connection (15);
the control unit based on DSP (5f) is adapted to receive measurements from a current sensor (5g) connected to the output of the DC/DC step-down converter (5d), from three current sensors (5h), connected to the output of the second DC/AC inverter (5b), from three current sensors (5i) connected to the output of the first DC/AC inverter (5c), from a voltage sensor (5p) installed in the power distribution box (20), from an angular position sensor (24) installed in the shaft of the second electric machine (9) and from an angular position sensor (25) installed in the shaft of the first electric machine (6), and
the control unit (5f) is adapted to receive command signals and to send state signals through a control connection (15) which connects the electric energy conversion device (5) with the emulation device (3).

7. System according to any of the previous claims, wherein the emulation device (3) comprises:
- a model adapted to emulate the longitudinal and lateral dynamic performance of the vehicle (3a);
- a model which is adapted to emulate the performance of a continuous variable transmission (3b);
- a model adapted to emulate the performance of the coupling system (3d) of the internal combustion machine (2c) and electric machine (2d) towards the output shaft of the wheels;
- a model adapted to emulate the performance of a conventional ABS braking system of the vehicle (3c);
- a virtual real scenario model (3f) adapted to emulate the driving environment.

8. System according to claim 7, wherein the longitudinal and lateral dynamic performance model of the vehicle (3a) is adapted to calculate and to reproduce in real time the longitudinal, vertical and lateral forces occurring in the drive wheels due to the effect of the movement of the vehicle, further obtaining the absolute position of the center of gravity of the vehicle in the X,Y,Z coordinates on a fixed reference system and the angular position thereof relating to the three angles on a mobile reference system placed in its center of gravity, using:
- the inputs corresponding to the current drive torques relating to the shaft of the drive wheels calculated by the model emulating the performance of the coupling system (3d);
- the inputs corresponding to the gas and brake pedals and the steering wheel position obtained from the control panel management subsystem (2l) through the interface device (4);
- the emulated response, relating to the braking torques in the wheels, through the model emulating the performance of the conventional ABS braking system of the vehicle (3c);
- the dynamic parameters defining the vehicle;
- the parameters relating to the environment through which the vehicle is moving coming from the virtual real scenario model (3f).

9. System according to any of claims 7 or 8, wherein the model emulating the performance of the continuous variable transmission (3b) is adapted to reproduce its performance, adapted to decide and select the transmission ratio value to be imposed between the shaft of the internal combustion machine (2c) and the output shaft towards the drive wheel transmission system and is adapted to select the transmission ratio to be imposed depending on the torque and speed state variables of the internal combustion machine (2c), being able to implement different alternatives or laws for selecting the best time to change and select the transmission ratio values to evaluate the incidence thereof in the energy efficiency of the hybrid drive system to be tested.

10. System according to any of claims 7 to 9, wherein the model emulating the performance of the coupling system of the internal combustion machine (2c) and electric machine (2d) towards the output shaft of the wheels is adapted to calculate the current drive torques relating to the shaft of the drive wheels, using to that end the current torque measurements in the shaft of the internal combustion machine (2c) and in the shaft of the electric machine (2d), the transmission ratios selected by the model emulating the performance of a continuous variable transmission (3b), the transmission ratio value existing between the shaft of the electric machine (2d) and the output shaft towards the drive wheel transmission system, the different static and dynamic parameters which characterize the coupling system and the series, parallel, strictly electric or electric operating modes with range expansion, and the distribution of powers in each of the modes decided and selected by the energy management subsystem to be tested (2a).

11. System according to claim 10, wherein the model emulating the performance of the coupling system of the internal combustion machine (2c) and electric machine (2d) towards the output shaft of the wheels is adapted to calculate the equivalent resistance torques relating to the shafts of the internal combustion machine (2c) and electric machine (2d) and is adapted to send them to the electric energy conversion device (5) so that the latter can impose them in a controlled manner, emulating the performance of an actual continuous variable transmission and coupling system, in the shafts of the machines (2d) and (2c) through the first and second electric machines (6) and (9) respectively, for which purpose it is adapted to receive the resistance torques, which opposes the drive force of the vehicle, relating to the shaft of the drive wheels calculated by the dynamic performance model (3a), and transforms them into resistance torque variables in each of the shafts of the machines (2c) and (2d) using the transmission ratios selected by the model emulating the performance of a continuous variable transmission (3b), the transmission ratio value existing between the shaft of the electric machine (2d) and the output shaft towards the drive wheel transmission system, the different static and dynamic parameters which characterize to the coupling system, and the series, parallel, strictly electric or electric operating modes with range expansion, and the distribution of powers in each of the modes decided and selected by the energy management subsystem to be tested (2a).

12. System according to claim 11, wherein the model emulating the performance of the coupling system of the internal combustion machine (2c) and electric machine (2d) towards the output shaft of the wheels is adapted to calculate the power reference to be sent to the power distribution and junction box containing the direct current bus HVDC-link (20) depending on the decision made by the energy management subsystem (2a), sending said calculated power reference to the electric energy conversion device (5) so that it can impose said reference in the DC/DC. conversion stage (5d).

13. System according to any of claims 7 to 12, wherein the model emulating the performance of the conventional ABS braking system of the vehicle is adapted to obtain the braking forces in each wheel and sends them to the longitudinal and lateral dynamic performance model (3a), using the commanding orders calculated by the brake management subsystem (2k) to be tested, which are received through the interface device (4).

14. System according to any of claims 7 to 13, comprising a driver model (3h) which can emulate a driver driving on the selected scenario; emulating the driving of the course to be taken to automate the tests, the outputs of this model corresponding to the emulated response of the gas and brake pedals and steering angle of the steering wheel.

15. System according to any of the previous claims, comprising an interface device (4) which allows adapting and interconnecting the emulation device DVE (3) with the subsystems of the hybrid-electric drive system to be tested corresponding to the energy management subsystem (2a), the brake management subsystem (2k), and the control panel management subsystem (2m), this interface device (4) acting as a gateway, to adapt the communications protocols so that the variables shared in sending and receiving between the emulation device DVE (3) and the subsystems of the hybrid-electric drive system are interpreted and understood in both parts, the interface device (4) incorporating the adaptation of the communications protocols to application level on the CANbus and/or Flexray communications buses, it also being possible for there to be variables to be shared within these control connections which can be exchanged via physical inputs/outputs, in which case the interface device (4) has the adaptation hardware necessary for adapting the electric levels of the variables/signals which must be shared between the devices.

16. System according to any of the previous claims which allows testing and evaluating the performance and energy efficiency of a hybrid-electric drive system of any of the parallel, series, parallel-series, strictly electric or strictly electric with range expander architectures, comprising an internal combustion machine (2c), a electric machine (2d) or both machines, and the possible main electric power sources of which are a system of batteries (2b) and an optional range expansion unit (2f), allowing the reproduction in the shafts of the internal combustion machine (2c) and electric machine (2d) the resistance torques occurring due to the effect of the movement of the vehicle and depending on the parallel, series, parallel-series, strictly electric or regenerative braking operating modes and the respective power distributions thereof decided and managed by the energy management subsystem (2a) incorporated in the mentioned hybrid-electric drive system (2) to be tested and evaluated.

17. System according to any of the preceding claims, wherein the system is adapted for subjecting the hybrid-electric drive system to a plurality of operating modes selected from the group comprising: series mode, parallel mode, parallel-series mode, pure electric mode, pure electric mode with range expander, and regenerative braking mode.

## Patentansprüche

1. System zum Testen und zum Evaluieren der Leistung und der Energieeffizienz eines hybrid-elektrischen Antriebssystems (2) eines Kraftfahrzeugs, aufweisend eine Testbank (1), die von einer Emulationsvorrichtung (3) gesteuert wird, die das Fahren des Fahrzeugs in Echtzeit emulieren kann, wobei die Testbank (1) mechanisch verbindbar mit einer Verbrennungsmaschine (2c) und einer elektrischen Maschine (2d) des zu testenden hybrid-elektrischen Antriebssystems (2) ist, **dadurch gekennzeichnet, dass** die Testbank (1) aufweist:
eine erste elektrische Maschine (6), die mit der elektrischen Maschine (2d) des hybrid-elektrischen Antriebssystems (2) mittels einer ersten direkten mechanischen Kupplung (7) gekoppelt werden kann;
eine zweite elektrische Maschine (9), die mit der Verbrennungsmaschine (2c) des hybrid-elektrischen Antriebssystems (2) mittels einer zweiten direkten mechanischen Kupplung (10) gekoppelt werden kann;
eine elektrische Energieumwandlungsvorrichtung (5), die ausgestaltet ist zur Steuerung des Drehmoments, das von der ersten elektrischen Maschine (6) geliefert werden kann, und des Drehmoments, das von der zweiten elektrischen Maschine (9) geliefert werden kann, und der Leistung, die zu einem Leistungsverteilungs- und Anschlusskasten (20) zu liefern ist, der den Gleichstrombus des hybrid-elektrischen Antriebssystems (2) enthält, und
eine Steuerverbindung (15), die ausgestaltet ist zum Verbinden der elektrischen Energieumwandlungsvorrichtung (5) mit der Emulationsvorrichtung (3);
und dass die Emulationsvorrichtung (3) ausgestaltet ist zum Berechnen des Widerstandsdrehmoments, das von der ersten elektrischen Maschine (6) auf die Welle der elektrischen Maschine (2d) ausgeübt wird, und des Widerstandsdrehmoments, das von der zweiten elektrischen Maschine auf die Welle der Verbrennungsmaschine (2c) ausgeübt wird, und der Leistung, die zu dem Leistungsverteilungs- und
Anschlusskasten (20) enthaltend den Gleichstrombus durch die Energieumwandlungsvorrichtung (5) zu liefern ist, abhängig von den Widerstandskräften, die den Antriebskräften entgegengesetzt sind aufgrund der Wirkung des emulierten Antriebs des Fahrzeugs und des Betriebsmodus des hybrid-elektrischen Antriebssystems während des Tests.

2. System nach Anspruch 1, bei dem die Testbank (1) durch eine Schnittstellenvorrichtung (4) mit einem Energiemanagement-Subsystem (2a), einem Bremsmanagement-Subsystem (2k) und einem Steuertafelmanagement-Subsystem des Fahrzeugs (2l) des zu testenden hybrid-elektrischen Antriebssystems (2) verbindbar ist.

3. System nach einem der vorhergehenden Ansprüche, aufweisend einen ersten Drehmomentsensor (25), der in der Welle der ersten elektrischen Maschine (6) installiert ist, und eine erste Steuerverbindung (23), die ausgestaltet ist zum Verbinden des genannten ersten Drehmomentsensors (25) mit der elektrischen Energieumwandlungsvorrichtung (5).

4. System nach einem der vorhergehenden Ansprüche, aufweisend einen zweiten Drehmomentsensor (24), der in der Welle der zweiten elektrischen Maschine (9) installiert ist, und eine zweite Steuerverbindung (22), die ausgestaltet ist zum Verbinden des genannten zweiten Drehmomentsensors (24) mit der elektrischen Energieumwandlungsvorrichtung (5).

5. System nach einem der vorhergehenden Ansprüche, bei dem die elektrische Energieumwandlungsvorrichtung (5) einen Eingang (11a) für Wechselstrom konstanter Frequenz, einen ersten Ausgang (19b) für Wechselstrom variabler Frequenz und Größe, der mit der ersten elektrischen Maschine (6) verbunden ist, einen zweiten Ausgang (19a) für Wechselstrom variabler Frequenz und Größe, der mit der zweiten elektrischen Maschine (9) verbunden ist, und einen Gleichstrom-Leistungsausgang (12), der mit dem Leistungsverteilungs- und Anschlusskasten (20) des hybrid-elektrischen Antriebssystems (2) verbunden ist, aufweist.

6. System nach Anspruch 5, bei dem die elektrische Energieumwandlungsvorrichtung (5) einen Wechselstrom/Gleichstrom-Zweiwegewandler (5a), der durch seinen Eingang mit dem Wechselstrom-Verbindungseingang (11a) und durch seinen Gleichstrom-Ausgang mit dem Leistungsverteilungskasten (20), durch einen Gleichstrom-Untersetzungswandler (5d) mit einem ersten Gleichstrom/Wechsel-Wechselrichter (5c), der über den ersten Ausgang (19b) für Wechselstrom mit der ersten elektrischen Maschine (6) verbunden ist, und mit einem zweiten Gleichstrom/Wechselstrom-Wechselrichter (5b), der über den zweiten Ausgang (19a) für Wechselstrom mit der zweiten elektrischen Maschine (9) verbunden ist, verbunden ist, und wobei:
der Wechselstrom/Gleichstrom-Wandler (5a), der erste Wechselstrom/Gleichstrom-Wechselrichter (5c), der zweite Gleichstrom/Wechselstrom-Wechselrichter (5b) und der Gleichstromuntersetzer (5d) ausgestaltet sind zum Empfangen von Zündsignalen von einem Modul (5e) enthaltend die Zündschaltungen, und das seinerseits mit einer Steuereinheit auf der Grundlage eines DSP (Prozessor für digitale Signale) (5f) der die statische und dynamische Antwort der elektrischen Energieumwandlungsstufen der Umwandlungsvorrichtung (5) für elektrische Energie steuert, verbunden ist, und ausgestaltet sind zum Durchführen der Steuerungen der ersten und zweiten elektrischen Maschine (6, 9) und der Steuerung der zu dem Leistungsverteilungs- und Anschlusskasten (20) der den Gleichstrombus des hybrid-elektrischen Antriebssystems (2) enthält, gelieferten Leistung, alle abhängig von den von der Emulationsvorrichtung (3) durch die Verbindung (15) empfangenen Leitlinien;
die Steuereinheit basierend auf dem DSP (5f) ausgestaltet ist zum Empfangen von Messungen von einem Stromsensor (5g), der mit dem Ausgang des Gleichstromuntersetzers (5d) verbunden ist, von drei Stromsensoren (5h), die mit dem Ausgang des zweiten Gleichstrom/Wechselstrom-Wechselrichters (5b) verbunden sind, von drei Stromsensoren (5i), die mit dem Ausgang des ersten Gleichstrom/Wechselstrom-Wechselrichters (5c) verbunden sind, von einem Spannungssensor (5p), der in dem Leistungsverteilungskasten (20) installiert ist, von einem Winkelpositionssensor (24), der in der Welle der zweiten elektrischen Maschine (9) installiert ist, und von einem Winkelpositionssensor (25), der in der Welle der ersten elektrischen Maschine (6) installiert ist, und
die Steuereinheit (5f) ausgestaltet ist zum Empfangen von Befehlssignalen und zum Senden von Zustandssignalen durch eine Steuerverbindung (15), die die elektrische
Energieumwandlungsvorrichtung (5) mit der Emulationsvorrichtung (3) verbindet.

7. System nach einem der vorhergehenden Ansprüche, bei dem die Emulationsvorrichtung (3) aufweist:
- ein Modell, das ausgestaltet ist zum Emulieren der dynamischen Leistung des Fahrzeugs (3a) in Längs- und Seitenrichtung;
- ein Modell, das ausgestaltet ist zum Emulieren der Leistung eines kontinuierlichen variablen Getriebes (3b);
- ein Modell, das ausgestaltet ist zum Emulieren der Leistung des Kupplungssystems (3d) der Verbrennungsmaschine (2c) und der elektrischen Maschine (2d) zu der Ausgangswelle der Räder;
- ein Modell, das ausgestaltet ist zum Emulieren der Leistung eines herkömmlichen ABS-Bremssystems des Fahrzeugs (3c);
- ein virtuelles Modell (3f) eines echten Szenariums, das ausgestaltet ist zum Emulieren des Antriebsumfelds.

8. System nach Anspruch 7, bei dem das dynamische Leistungsmodell des Fahrzeugs (3a) in Längs- und Seitenrichtung ausgestaltet ist zum Berechnen und Wiedergeben in Echtzeit der Kräfte in Längs-, vertikaler und Seitenrichtung, die in den Antriebsrädern auftreten aufgrund der Wirkung der Bewegung des Fahrzeugs, weiterhin erhaltend die absolute Position des Schwerpunkts des Fahrzeugs in der X-, Y- und Z-Koordinate eines festen Bezugssystems und der Winkelposition hiervon in Bezug auf die drei Winkel in einem mobilen Bezugssystem, das in seinem Schwerpunkt angeordnet ist, hierbei verwendend:
- die Eingangssignale entsprechend den gegenwärtigen Antriebsdrehmomenten bezogen auf die Welle der Antriebsräder, die durch das die Leistung des Kupplungssystems (3d) emulierende Modell berechnet wurden;
- die Eingangssignale entsprechend dem Gas- und dem Bremspedal und der Lenkradposition, die von dem Steuertafelmanagement-Subsystem (2l) durch die Schnittstellenvorrichtung (4) erhalten wurden;
- die emulierte Antwort, bezogen auf die Bremsdrehmomente in den Rädern, durch das die Leistung des herkömmlichen ABS-Bremssystems des Fahrzeugs (3c) emulierenden Modells;
- die dynamischen Parameter, die das Fahrzeug definieren;
- die Parameter, die auf das Umfeld bezogen sind, durch das das Fahrzeug sich bewegt und das von dem virtuellen Modell des realen Szenariums (3f) kommt.

9. System nach einem der Ansprüche 7 oder 8, bei dem das die Leistung des kontinuierlichen variablen Getriebes (3b) emulierende Modell ausgestaltet ist zum Wiedergeben seiner Leistung, ausgestaltet ist zum Bestimmen und Auswählen des Getriebeverhältniswerts, das zwischen der Welle der Verbrennungsmaschine (2c) und der Ausgangswelle zu dem Antriebsrad-Getriebesystem hin einzustellen ist, und ausgestaltet ist zum Auswählen des einzustellenden Getriebeverhältnisses in Abhängigkeit von den Variablen des Drehmoment- und Geschwindigkeitszustands der Verbrennungsmaschine (2c), wobei es in der Lage ist, verschiedene Alternativen oder Gesetze zum Auswählen der besten Zeit zur Änderung und Auswahl der Getriebeverhältniswerte, um das Auftreten von diesen in der Energieeffizienz des zu testenden Hybrid-Antriebssystems zu evaluieren, zu implementieren.

10. System nach einem der Ansprüche 7 bis 9, bei dem das die Leistung des Kupplungssystems der Verbrennungsmaschine (2c) und der elektrischen Maschine (2d) zu der Ausgangswelle der Räder hin emulierende Modell ausgestaltet ist zum Berechnen der gegenwärtigen Antriebsdrehmomente in Bezug auf die Welle der Antriebsräder, unter Verwendung der Messungen des gegenwärtigen Drehmoments in der Welle der Verbrennungsmaschine (2c) und in der Welle der elektrischen Maschine (2d) zu diesem Zweck, der von dem die Leistung eines kontinuierlichen variablen Getriebes (3b) emulierenden Modell ausgewählten Getriebeverhältnisse, des zwischen der Welle der elektrischen Maschine (2d) und der Ausgangswelle zu dem Antriebsrad-Getriebesystem hin existierenden Getriebeverhältniswerts, der verschiedenen statischen und dynamischen Parameter, die das Kupplungssystem und die in Reihe, parallel, strikt elektrischen oder elektrisch operierenden Moden mit Bereichsausdehnung, und die Verteilung von Leistungen in jedem der Moden, die durch das zu testende Energiemanagement-Subsystem (2a) bestimmt und ausgewählt sind, charakterisieren.

11. System nach Anspruch 10, bei dem das die Leistung des Kupplungssystems der Verbrennungsmaschine (2c) und der elektrischen Maschine (2d) zu der Ausgangswelle der Räder hin emulierende Modell ausgestaltet ist zum Berechnen der äquivalenten Widerstandsdrehmomente, die auf die Wellen der Verbrennungsmaschine (2c) und der elektrischen Maschine (2d) bezogen sind, und ausgestaltet ist zum Senden von diesen zu der elektrischen Energieumwandlungsvorrichtung (5) derart, dass die letztere sie in einer gesteuerten Weise auferlegen kann, emulierend die Leistung eines tatsächlichen kontinuierlichen variablen Getriebe- und Kupplungssystems, in den Wellen der Maschinen (2d) und (2c) durch die erste bzw. zweite elektrische Maschine (6) und (9), für welchen Zweck sie ausgestaltet ist zum Empfangen der Widerstandsdrehmomente, die der Antriebskraft des Fahrzeugs entgegengesetzt sind, bezogen auf die Welle der Antriebsräder und berechnet durch das dynamische Leistungsmodell (3a), und zum Transformieren von diesen in Widerstandsdrehmomentvariable in jeder der Wellen der Maschinen (2c) und (2d) unter Verwendung der Getriebeverhältnisse, die von dem die Leistung eines kontinuierlichen variablen Getriebes (b) emulierenden Modells ausgewählt wurden, des Getriebeverhältniswerts, der zwischen der Welle der elektrischen Maschine (2d) und der Ausgangswelle zu dem Antriebsrad-Getriebesystem hin existiert, der verschiedenen statischen und dynamischen Parameter, die das Kopplungssystem charakterisieren, und der reihenweisen, parallelen, strikt elektrisch oder elektrisch operierenden Moden mit Bereichsausdehnung, und der Verteilung von Leistungen in jedem der Moden, die durch das zu testende Energiemanagement-Subsystem (2a) bestimmt und ausgewählt wurden.

12. System nach Anspruch 11, bei dem das Modell, das die Leistung des Kupplungssystems der Verbrennungsmaschine (2c) und der elektrischen Maschine (2d) zu der Ausgangswelle der Räder emuliert, ausgestaltet ist zum Berechnen der Leistungsreferenz, die zu dem Leistungsverteilungs- und Anschlusskasten zu senden ist, der die Gleichstrombus-HVDC-Verbindung (20) enthält, abhängig von der von dem Energiemanagement-Subsystem (2a) getroffenen Entscheidung, und die berechnete Leistungsreferenz zu der elektrischen Energieumwandlungsvorrichtung (5) sendet, so dass sie diese Referenz in der Gleichstrom-Umwandlungsstufe (5d) auferlegen kann.

13. System nach einem der Ansprüche 7 bis 12, bei dem das Modell, das die Leistung des herkömmlichen ABS-Bremssystems des Fahrzeugs emuliert, ausgestaltet ist zum Erhalten der Bremskräfte in jedem Rad und zum Senden von diesen zu dem dynamischen Leistungsmodell (3a) in der Längs- und Seitenrichtung, unter Verwendung der von dem zu testenden Bremsmanagement-Subsystem (2k) berechneten Befehle, die durch die Schnittstellenvorrichtung (4) empfangen wurden.

14. System nach einem der Ansprüche 7 bis 13, aufweisend ein Fahrermodell (3h), das einen Fahrer, der in dem ausgewählten Szenarium fährt, emulieren kann; Emulieren des Befahrens des zu nehmenden Weges, um die Tests zu automatisieren, wobei die Ausgangssignale dieses Modells der emulierten Antwort des Gas- und des Bremspedals und dem Lenkwinkel des Lenkrads entsprechen.

15. System nach einem der vorhergehenden Ansprüche, aufweisend eine Schnittstellenvorrichtung (4), die das Anpassen und Verbinden der Emulationsvorrichtung DVE (3) mit den Subsystemen des zu testenden hybrid-elektrischen Antriebssystems entsprechend dem Energiemanagement-Subsystem (2h), dem Bremsenmanagement-Subsystem (2k) und dem Steuertafelmanagement-Subsystem (2m) ermöglicht, wobei diese Schnittstellenvorrichtung (4) als ein Gateway wirksam ist, um die Kommunikationsprotokolle so anzupassen, dass die für das Senden und Empfangen zwischen der Emulationsvorrichtung DVE (3) und den Subsystemen des hybrid-elektrischen Antriebssystems gemeinschaftlichen Variablen in beiden Teilen interpretiert und verstanden werden, und die Schnittstellenvorrichtung (4) die Adaption der Kommunikationsprotokolle an den Anwendungspegel auf dem CAN-Bus und/oder den Flexray-Kommunikationsbussen verkörpert, und es auch möglich ist, dass Variable innerhalb dieser Steuerverbindungen gemeinschaftlich vorhanden sind, die über physische Eingänge/Ausgänge ausgetauscht werden können, in welchem Fall die Schnittstellenvorrichtung (4) die Adaptionshardware hat, die zum Adaptieren der elektrischen Pegel der Variablen/Signale, die zwischen den Vorrichtungen geteilt werden müssen, erforderlich ist.

16. System nach einem der vorhergehenden Ansprüche, das das Testen und Evaluieren der Leistung und der Energieeffizienz eines hybrid-elektrischen Antriebssystems von irgendeiner der parallelen, reihenweisen, parallel/reihenweisen, strikt elektrischen oder strikt elektrischen mit Bereichserweiterungsarchitekturen ermöglicht, aufweisend eine Verbrennungsmaschine (2c), eine elektrische Maschine (2d) oder beide Maschinen, und die möglichen elektrischen Hauptleistungsquellen hiervon ein System von Batterien (2b) und eine optionale Bereichserweiterungseinheit (2f) sind, ermöglichend in den Wellen der Verbrennungsmaschine (2c) und der elektrischen Maschine (2d) die Wiedergabe der Widerstandsdrehmomente, die aufgrund der Wirkung der Bewegung des Fahrzeugs auftreten und abhängig sind von den parallelen, reihenweisen, parallel/reihenweisen, strikt elektrischen oder regenerativen Bremsbetätigungsmoden und den jeweiligen Leistungsverteilung von diesen, die durch das Energiemanagement-Subsystem (2a) bestimmt und verwaltet werden, das in dem genannten, zu prüfenden und zu evaluierenden Hybrid-elektrischen Antriebssystem (2) aufgenommen ist.

17. System nach einem der vorhergehenden Ansprüche, wobei das System ausgestaltet ist zum Unterwerfen des hybrid-elektrischen Antriebssystems unter mehrere Operationsmoden, die von der Gruppe ausgewählt sind, die aufweist: Reihenmodus, Parallelmodus, Parallel-Reihenmodus, rein elektrischer Modus, rein elektrischer Modus mit Bereichserweiterung, und regenerativer Bremsmodus.

## Revendications

1. Système pour tester et évaluer les performances et le rendement énergétique d'un système de propulsion hybride-électrique (2) d'un véhicule automobile, comprenant un banc d'essai (1) commandé par un dispositif d'émulation (3) qui peut émuler la conduite du véhicule en temps réel, le banc d'essai (1) pouvant être mécaniquement connecté à un moteur à combustion interne (2c) et à un moteur électrique (2d) du système de propulsion hybride-électrique (2) à tester, **caractérisé en ce que** le banc d'essai (1) comprend :
un premier moteur électrique (6) qui peut être couplé au moteur électrique (2d) du système de propulsion hybride-électrique (2) au moyen d'un premier raccord mécanique direct (7) ;
un deuxième moteur électrique (9) qui peut être couplé au moteur à combustion interne (2c) du système de propulsion hybride-électrique (2) au moyen d'un deuxième raccord mécanique direct (10) ;
un dispositif de conversion d'énergie électrique (5) conçu pour contrôler le couple qui peut être fourni par le premier moteur électrique (6) et le couple qui peut être fourni par le deuxième moteur électrique (9) et la puissance à délivrer à un boîtier de distribution électrique et de jonction (20) contenant le bus de courant continu du système de propulsion hybride-électrique (2) et
une connexion de contrôle (15) qui est conçue pour relier le dispositif de conversion d'énergie électrique (5) au dispositif d'émulation (3) ;
et **en ce que** le dispositif d'émulation (3) est conçu pour calculer le couple de résistance appliqué par le premier moteur électrique (6) à l'arbre du moteur électrique (2d) et le couple de résistance appliqué par le deuxième moteur électrique à l'arbre du moteur à combustion interne (2c) et la puissance à délivrer au boîtier de distribution électrique et de jonction (20) contenant le bus continu, par l'intermédiaire du dispositif de conversion d'énergie (5), en fonction des forces de résistance qui s'opposent aux forces d'entraînement en raison de l'effet de la conduite émulée du véhicule et du mode de fonctionnement du système de propulsion hybride-électrique durant l'essai.

2. Système selon la revendication 1, dans lequel le banc d'essai (1) peut être relié, par l'intermédiaire d'un dispositif d'interface (4), à un sous-système de gestion de l'énergie (2a), à un sous-système de gestion du freinage (2k), et à un sous-système de gestion du panneau de commande du véhicule (2l) du système de propulsion hybride-électrique (2) à tester.

3. Système selon l'une quelconque des revendications précédentes, comprenant un premier capteur de couple (25) installé dans l'arbre du premier moteur électrique (6) et une première connexion de contrôle (23) qui est conçue pour relier ledit premier capteur de couple (25) au dispositif de conversion d'énergie électrique (5).

4. Système selon l'une quelconque des revendications précédentes, comprenant un deuxième capteur de couple (24) installé dans l'arbre du deuxième moteur électrique (9) et une deuxième connexion de contrôle (22) qui est conçue pour relier ledit deuxième capteur de couple (24) au dispositif de conversion d'énergie électrique (5).

5. Système selon l'une quelconque des revendications précédentes, dans lequel le dispositif de conversion d'énergie électrique (5) comprend une entrée de courant alternatif de fréquence constante (11a), une première sortie de courant alternatif de fréquence et d'amplitude variables (19b) reliée au premier moteur électrique (6), une deuxième sortie de courant alternatif de fréquence et d'amplitude variables (19a) reliée au deuxième moteur électrique (9), et une sortie de courant continu (12) reliée au boîtier de distribution électrique et de jonction (20) du système de propulsion hybride-électrique (2).

6. Système selon la revendication 5, dans lequel le dispositif de conversion d'énergie électrique (5) comprend un convertisseur CA/CC bidirectionnel (5a) relié par son entrée à l'entrée de connexion de courant alternatif (11a) et, par sa sortie de courant continu au boîtier de distribution électrique (20), par l'intermédiaire d'un convertisseur CC/CC abaisseur de tension (5d), à un premier inverseur CC/CA (5c) relié au premier moteur électrique (6) par l'intermédiaire de la première sortie de courant alternatif (19b) ainsi qu'à un deuxième inverseur CC/CA (5b) relié au deuxième moteur électrique (9) par l'intermédiaire de la deuxième sortie de courant alternatif (19a), et dans lequel :
le convertisseur CA/CC (5a), le premier inverseur CC/CA (5c), le deuxième inverseur CC/CA (5b) et le convertisseur CC/CC (5d) sont aptes à recevoir des signaux d'allumage d'un module (5e) contenant les circuits d'allumage et qui est à son tour relié à une unité de contrôle à base de DSP (processeur de signal numérique) (5f) qui contrôle la réponse statique et dynamique des étages de conversion de l'énergie électrique du dispositif de conversion d'énergie électrique (5), et sont aptes à réaliser la commande du premier et du deuxième moteur électriques (6, 9) et la commande de la puissance délivrée au boîtier de distribution électrique et de jonction (20) contenant le bus de courant continu du système de propulsion hybride-électrique (2), le tout en fonction des instructions reçues du dispositif d'émulation (3) par l'intermédiaire de la connexion (15) ;
l'unité de commande à base de DSP (5f) est conçue pour recevoir des mesures d'un capteur de courant (5g) relié à la sortie du convertisseur CC/CC abaisseur de tension (5d), de trois capteurs de courant (5h) reliés à la sortie du deuxième inverseur CC/AC (5b), de trois capteurs de courant (5i) reliés à la sortie du premier inverseur CC/CA (5c), d'un capteur de tension (5p) installé dans le boîtier de distribution électrique (20), d'un capteur de position angulaire (24) installé dans l'arbre du deuxième moteur électrique (9) et d'un détecteur de position angulaire (25) installé dans l'arbre du premier moteur électrique (6), et
l'unité de commande (5f) est conçue pour recevoir des signaux de commande et à envoyer des signaux d'état par l'intermédiaire d'une connexion de contrôle (15) qui relie le dispositif de conversion d'énergie électrique (5) au dispositif d'émulation (3).

7. Système selon l'une quelconque des revendications précédentes, dans lequel le dispositif d'émulation (3) comprend :
- un modèle conçu pour émuler la performance dynamique longitudinale et latérale du véhicule (3a) ;
- un modèle conçu pour émuler la performance d'une transmission variable et continue (3b) ;
- un modèle conçu pour émuler la performance du système de couplage (3d) du moteur à combustion interne (2c) et du moteur électrique (2d) vis-à-vis de l'arbre de sortie des roues ;
- un modèle conçu pour émuler la performance d'un système conventionnel de freinage ABS du véhicule (3c) ;
- un modèle de scénario réel virtuel (3f) conçu pour émuler l'environnement de conduite.

8. Système selon la revendication 7, dans lequel le modèle de performance dynamique longitudinale et latérale du véhicule (3a) est conçu pour calculer et pour reproduire en temps réel les forces longitudinales, verticales et latérales qui se produisent dans les roues motrices en raison du mouvement du véhicule, en obtenant en outre la position absolue du centre de gravité du véhicule dans le système de coordonnées X, Y, Z dans un système de référence fixe et la position angulaire de celui-ci par rapport aux trois angles dans un système de référence mobile placé dans son centre de gravité, en utilisant :
- les entrées correspondant aux couples moteurs actuels se rapportant à l'arbre des roues d'entraînement calculées par le modèle émulant la performance du système de couplage (3d) ;
- les entrées correspondant aux pédales d'accélérateur et de frein et à la position du volant de direction obtenues du sous-système de gestion du panneau de commande (2l) par l'intermédiaire du dispositif d'interface (4) ;
- la réponse émulée relative aux couples de freinage dans les roues, par l'intermédiaire du modèle émulant la performance du système conventionnel de freinage ABS du véhicule (3c) ;
- les paramètres dynamiques définissant le véhicule;
- les paramètres liés à l'environnement à travers lequel se déplace le véhicule provenant du modèle de scénario réel virtuel (3f).

9. Système selon l'une quelconque des revendications 7 ou 8, dans lequel le modèle émulant la performance de la transmission variable et continue (3b) est conçu pour reproduire sa performance, est conçu pour décider et pour sélectionner la valeur de rapport de transmission à imposer entre l'arbre du moteur à combustion interne (2c) et l'arbre de sortie vers le système de transmission des roues motrices, et est conçu pour sélectionner le rapport de transmission à imposer en fonction du couple et de variables de l'état de vitesse du moteur à combustion interne (2c), en étant conçu pour mettre en oeuvre différentes alternatives ou lois pour sélectionner le meilleur moment pour changer et sélectionner les valeurs des rapports de transmission pour évaluer l'incidence de ceux-ci dans le rendement énergétique du système de propulsion hybride à tester.

10. Système selon l'une quelconque des revendications 7 à 9, dans lequel le modèle émulant la performance du système de couplage du moteur à combustion interne (2c) et du moteur électrique (2d) sur l'arbre de sortie des roues est conçu pour calculer les couples moteurs actuels se rapportant à l'arbre des roues motrices en utilisant à cette fin les mesures du couple actuel dans l'arbre du moteur à combustion interne (2c) et dans l'arbre du moteur électrique (2d), les rapports de transmission sélectionnés par le modèle émulant la performance d'une transmission variable et continue (3b), la valeur du rapport de transmission existant entre l'arbre du moteur électrique (2d) et l'arbre de sortie vers le système de transmission de roue motrice, les différents paramètres statiques et dynamiques qui caractérisent le système de couplage et les modes de fonctionnement en série, en parallèle, strictement électrique ou électrique avec extension d'autonomie, ainsi que la répartition des puissances dans chacun des modes décidés et choisis par le sous-système de gestion de l'énergie à tester (2a).

11. Système selon la revendication 10, dans lequel le modèle émulant la performance du système de couplage du moteur à combustion interne (2c) et du moteur électrique (2d) sur l'arbre de sortie des roues est conçu pour calculer les couples de résistance équivalents relatifs aux arbres du moteur à combustion interne (2c) et du moteur électrique (2d), et est conçu pour les envoyer au dispositif de conversion d'énergie électrique (5) de sorte que ce dernier peut les imposer de manière contrôlée, en émulant la performance d'un système existant de couplage et de transmission variable et continue, aux arbres des moteurs (2d) et (2c) par l'intermédiaire du premier et du deuxième moteur électriques (6) et (9) respectivement, il est capable à cet effet de recevoir les couples de résistance, qui s'opposent à la force motrice du véhicule, par rapport à l'arbre des roues motrices calculées par le modèle de performance dynamique (3a), et les transforme en variables du couple de résistance dans chacun des axes des moteurs (2c) et (2d) en utilisant les rapports de transmission sélectionnés par le modèle émulant la performance d'une transmission variable et continue (3b), la valeur du rapport de transmission existant entre l'arbre du moteur électrique (2d) et l'arbre de sortie vers le système de transmission de roue motrice, les différents paramètres statiques et dynamiques qui caractérisent le système de couplage, et les modes de fonctionnement en série, en parallèle, strictement électrique ou électrique avec extension d'autonomie, ainsi que la répartition des compétences dans chacun des modes décidés et choisis par le sous-système de gestion de l'énergie à tester (2a).

12. Système selon la revendication 11, dans lequel le modèle émulant la performance du système de couplage du moteur à combustion interne (2c) et du moteur électrique (2d) sur l'arbre de sortie des roues est conçu pour calculer la consigne de puissance à envoyer au boîtier de distribution électrique et de jonction contenant le bus de courant continu à liaison CCHT (HVDC-link) (20) en fonction de la décision prise par le sous-système de gestion de l'énergie (2a), en envoyant ladite consigne de puissance calculée au dispositif de conversion d'énergie électrique (5) de sorte qu'il peut imposer ladite consigne à l'étage de conversion CC/CC (5d).

13. Système selon l'une quelconque des revendications 7 à 12, dans lequel le modèle émulant la performance du système de freinage ABS classique du véhicule est conçu pour obtenir les forces de freinage dans chaque roue et les envoie au modèle de performance dynamique longitudinale et latérale (3a), en utilisant les ordres de commande calculés par le sous-système de gestion du freinage (2k) à tester, lesquels sont reçus par l'intermédiaire du dispositif d'interface (4).

14. Système selon l'une quelconque des revendications 7 à 13, comprenant un modèle de conducteur (3h) pouvant émuler un conducteur conduisant dans le scénario choisi ; en émulant la conduite de la course à suivre pour automatiser les tests, les sorties de ce modèle correspondant à la réponse émulée des pédales d'accélération et de frein et de l'angle de braquage du volant.

15. Système selon l'une quelconque des revendications précédentes, comprenant un dispositif d'interface (4) qui permet l'adaptation et l'interconnexion du dispositif émulant l'environnement conducteur véhicule (DVE) (3) aux sous-systèmes du système de propulsion hybride-électrique à tester correspondant au sous-système de gestion de l'énergie (2a), au sous-système de gestion du freinage (2k), et au sous-système de gestion du tableau de commande (2m), ce dispositif d'interface (4) servant de passerelle pour adapter les protocoles de communication de sorte que les variables partagées à l'envoi et à la réception entre le dispositif d'émulation DVE (3) et les sous-systèmes du système de propulsion hybride-électrique sont interprétées et comprises dans les deux parties, le dispositif d'interface (4) incorporant l'adaptation des protocoles de communication au niveau d'application sur le bus CAN et/ou les bus de communication FlexRay, comme il est également possible qu'il y ait des variables à partager au sein de ces connexions de contrôle qui peuvent être échangées par l'intermédiaire d'entrées/sorties physiques, auquel cas le dispositif d'interface (4) possède le matériel d'adaptation nécessaire pour adapter les niveaux électriques des variables/signaux qui doivent être partagés entre les dispositifs.

16. Système selon l'une quelconque des revendications précédentes, qui permet de tester et d'évaluer la performance et l'efficacité énergétique d'un système de propulsion hybride-électrique de l'une quelconque des architectures en parallèle, en série, en parallèle-série, strictement électrique ou strictement électrique avec extension d'autonomie, comprenant un moteur à combustion interne (2c), un moteur électrique (2d) ou les deux moteurs, et dont les principales sources d'alimentation électrique possibles sont un système de batteries (2b) et une unité d'extension d'autonomie optionnelle (2f), permettant de reproduire dans les arbres du moteur à combustion interne (2c) et du moteur électrique (2d) les couples de résistance se produisant sous l'effet du déplacement du véhicule et en fonction du mode de fonctionnement en parallèle, en série, en parallèle-série, strictement électriques ou avec freinage par récupération et en fonction des répartitions de puissance respectives de ceux-ci décidés et gérés par le sous-système de gestion d'énergie (2a) incorporé dans le système de propulsion hybride-électrique mentionné (2) devant être testé et évalué.

17. Système selon l'une quelconque des revendications précédentes, dans lequel le système est conçu pour soumettre le système de propulsion hybride-électrique à une pluralité de modes de fonctionnement choisis dans le groupe comprenant : le mode en série, le mode en parallèle, le mode en série-parallèle, le mode strictement électrique, le mode strictement électrique avec extension d'autonomie et le mode à freinage par récupération.
